(19) **Europäisches Patentamt** / **European Patent Office** / **Office européen des brevets**

(11) **EP 4 296 095 A1**

(12) **EUROPEAN PATENT APPLICATION**
published in accordance with Art. 153(4) EPC

(43) Date of publication:
27.12.2023 Bulletin 2023/52

(21) Application number: 21926834.9

(22) Date of filing: 28.12.2021

(51) International Patent Classification (IPC):
*B60H 1/00* (2006.01)        *F24F 11/62* (2018.01)
*F24F 11/70* (2018.01)        *F24F 120/14* (2018.01)
*G01J 5/48* (2022.01)

(52) Cooperative Patent Classification (CPC):
**B60H 1/00; F24F 11/62; F24F 11/70; G01J 5/48;**
F24F 2120/14

(86) International application number:
**PCT/JP2021/048942**

(87) International publication number:
**WO 2022/176411 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 17.02.2021 JP 2021023776

(71) Applicant: **Panasonic Intellectual Property Management Co., Ltd.**
**Kadoma-shi, Osaka 571-0057 (JP)**

(72) Inventors:
• **YONEDA, Aki**
  **Kadoma-shi, Osaka 571-0057 (JP)**
• **SHIKII, Shinichi**
  **Kadoma-shi, Osaka 571-0057 (JP)**

(74) Representative: **Novagraaf International SA**
**Chemin de l'Echo 3**
**1213 Onex, Geneva (CH)**

(54) **THERMAL SENSATION ESTIMATION DEVICE, AIR CONDITIONING DEVICE, AIR CONDITIONING SYSTEM, THERMAL SENSATION ESTIMATION METHOD, AND PROGRAM**

(57)     The problem to be overcome by the present disclosure is to contribute to improving accuracy of estimating thermal sensation including an influence of a fever of an estimation target. A thermal sensation estimation device (1) includes an acquirer (11), a clothing amount estimator (13), a heat loss amount estimator (14) and a thermal sensation estimator (17). The acquirer (11) acquires information about a surface temperature of a surface region in a part of clothing of a user. The clothing amount estimator (13) estimates a clothing amount at a clothed portion, the clothed portion being a part of a body of the user, covered with the surface region. The heat loss amount estimator (14) estimates, based on at least the information about the surface temperature and the clothing amount, a heat loss amount lost from the user's body. The thermal sensation estimator (17) estimates thermal sensation of the user based on the heat loss amount.

FIG. 1

## Description

## Technical Field

The present disclosure generally relates to thermal sensation estimation devices, air conditioning devices, air conditioning systems, thermal sensation estimation methods, and programs. More particularly, the present disclosure relates to a thermal sensation estimation device, an air conditioning device, an air conditioning system, a thermal sensation estimation method, and a program, all of which estimate thermal sensation including an influence of clothing.

## Background Art

Patent Literature 1 discloses an air conditioning device for vehicle, which includes a surface temperature sensor that detects a surface temperature of a clothing part of a passenger to output a clothing part temperature signal. The air conditioning device for vehicle calculates, based on the clothing part temperature signal, a heat sensation estimation value as an estimation value of the heat sensation of the passenger, and controls the air conditioning in the vehicle interior based on the heat sensation estimation value.

According to the air conditioning device for vehicle, it may be expected that the estimated accuracy of the thermal sensation is improved and furthermore the comfortable air conditioning controlling is realized by accurately detecting the surface temperature of the clothing part. However, in the air conditioning device for vehicle, if the passenger has a fever because of his/her cold, the surface temperature of the clothing part may be also increased, and the heat sensation estimation value may be estimated as a value on the "hot" side with respect to the actual thermal sensation. As a result, the air conditioning device for vehicle may perform the air conditioning to reduce the temperature, even though the passenger catches a cold.

## Citation List

## Patent Literature

Patent Literature 1: JP 2002-127728 A

## Summary of Invention

It is therefore an object of the present disclosure to provide a thermal sensation estimation device, an air conditioning device, an air conditioning system, a thermal sensation estimation method, and a program, all of which contribute to improving accuracy of estimating thermal sensation including an influence of a fever of an estimation target.

A thermal sensation estimation device according to an aspect of the present disclosure includes an acquirer, a clothing amount estimator, a heat loss amount estimator and a thermal sensation estimator. The acquirer is configured to acquire information about a surface temperature of a surface region in a part of clothing of a user. The clothing amount estimator is configured to estimate a clothing amount at a clothed portion, the clothed portion being a part of a body of the user, covered with the surface region. The heat loss amount estimator is configured to estimate, based on at least the information about the surface temperature and the clothing amount, a heat loss amount lost from the user's body. The thermal sensation estimator is configured to estimate thermal sensation of the user based on the heat loss amount.

An air conditioning device according to an aspect of the present disclosure includes an air conditioning unit and an air conditioning controller. The air conditioning unit is configured to blow out wind in which at least one of a wind volume or a wind temperature is adjusted. The air conditioning controller configured to control the air conditioning unit based on the thermal sensation of the user, estimated by the thermal sensation estimation device.

An air conditioning system according to an aspect of the present disclosure includes the thermal sensation estimation device, and one or more air conditioning devices. Each of the one or more air conditioning devices includes an air conditioning unit, and an air conditioning controller. The air conditioning unit is configured to blow out wind in which at least one of a wind volume or a wind temperature is adjusted. The air conditioning controller is configured to control the air conditioning unit based on the thermal sensation of the user, estimated by the thermal sensation estimation device.

A thermal sensation estimation method according to an aspect of the present disclosure includes an acquisition step, a clothing amount estimation step, a heat loss amount estimation step, and a thermal sensation estimation step. The acquisition step includes acquiring information about a surface temperature of a surface region in a part of clothing of a user. The clothing amount estimation step includes estimating a clothing amount at a clothed portion, the clothed portion being a part of a body of the user, covered with the surface region. The heat loss amount estimation step includes estimating, based on at least the information about the surface temperature and the clothing amount, a heat loss amount lost from the user's body. The thermal sensation estimation step includes estimating thermal sensation of the user based on the heat loss amount.

A program according to an aspect of the present disclosure is designed to cause one or more processors to perform the thermal sensation estimation method described above.

## Brief Description of Drawings

FIG. 1 is a block diagram of a thermal sensation estimation device according to an exemplary embodiment of the present disclosure;

FIG. 2 is a block diagram of a heat loss amount estimator included in the thermal sensation estimation device;

FIG. 3 is an explanatory diagram for explaining an estimation method of estimating a heat loss amount, according to the thermal sensation estimation device;

FIG. 4 is an explanatory diagram for a data structure of second correspondence information to be used by a clothing amount estimator included in the thermal sensation estimation device;

FIG. 5 is a flowchart for explaining about how the thermal sensation estimation device operates;

FIG. 6 is a flowchart for explaining a skin temperature estimation processing in the operation of the thermal sensation estimation device;

FIG. 7 is a flowchart for explaining a thermal sensation estimation processing in the operation of the thermal sensation estimation device;

FIG. 8 is a schematic diagram of a car using an air conditioning system including the thermal sensation estimation device;

FIG. 9 is a schematic diagram of an interior of the car;

FIG. 10 is a schematic diagram showing an arrangement of an air blowout port of an air conditioning device in the interior;

FIG. 11 is a block diagram showing a first variation of the heat loss amount estimator;

FIG. 12 is a flowchart for explaining a heat loss amount estimation processing in the first variation;

FIG. 13 is a block diagram showing a second variation of the heat loss amount estimator; and

FIG. 14 is a flowchart for explaining a heat loss amount estimation processing in the second variation.

**Description of Embodiments**

Note that the exemplary configuration described in the following embodiment is only an exemplary one of various configurations of the present disclosure and should not be construed as limiting. Rather, the exemplary configuration may be readily modified in various manners depending on a design choice or any other factor, as long as the effect of the present disclosure can be achieved.

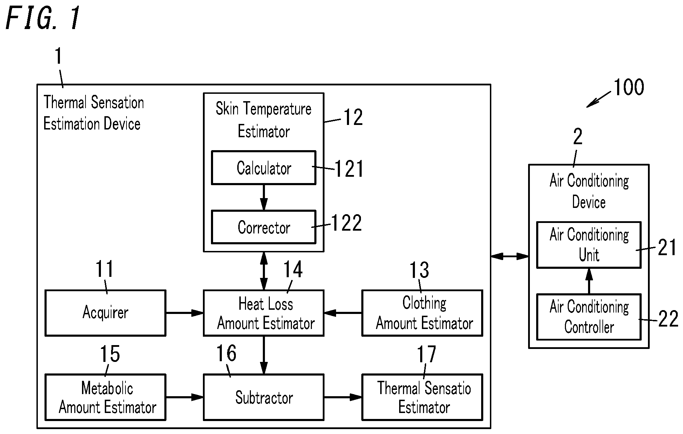

A thermal sensation estimation device 1 and an air conditioning system 100 according to an exemplary embodiment of the present disclosure will be described with reference to FIGS. 1 to 14.

(1) Overview of Air Conditioning System

The air conditioning system 100 according to an exemplary embodiment of the present disclosure includes the thermal sensation estimation device 1 and an air conditioning device 2.

The thermal sensation estimation device 1 is configured to estimate thermal sensation of a user.

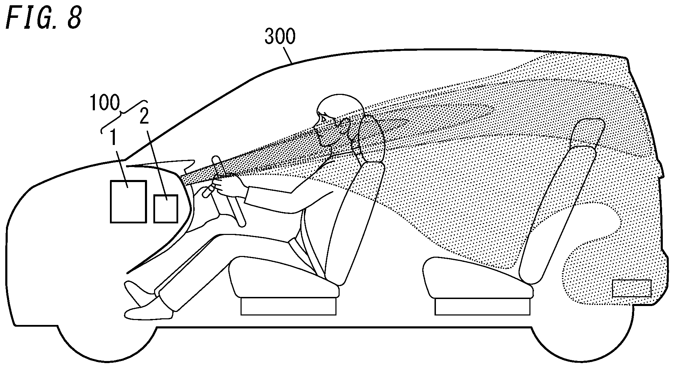

The user is assumed to usually stay in an interior but may be outdoors. The interior is assumed to be, for example, an interior of a car 300 described later, as shown in FIGS. 8 to 10, and should not be construed as limiting. The interior may be an interior of a vehicle (such as a train or an aircraft) other than the car 300 or may be a room of building (indoor). The user is assumed to be seated on, for example, a seat 330 in the interior, but may be standing. The seat 330 in the interior is assumed to be, for example, a driving seat in the car interior, as shown in FIG. 8, but may be a sofa in a living room (not shown).

The thermal sensation in the present embodiment is information about the degree of warmth or coolness felt by the user. More specifically, for example, the thermal sensation is information such as "hot," "warm," "comfortable," "cool," and "cold," but may be numerical values such as "2," "1," "0," "-1," and "-2" respectively associated with "hot," "warm," "comfortable," "cool," and "cold."

In general, the thermal sensation depends on an air temperature, a humidity, a wind speed, a radiant temperature (for example, a surface temperature of clothing), a metabolic amount and a clothing amount. The feature of the thermal sensation estimation method in the present disclosure is in estimating the thermal sensation including the influence of wind, without using the wind speed in the six factors described above.

The air conditioning device 2 is configured to blow out wind in which at least one of a wind volume or a wind temperature is adjusted, based on the thermal sensation estimated by the thermal sensation estimation device 1.

(2) Thermal sensation estimation device

The thermal sensation estimation device 1 according to an exemplary embodiment of the present disclosure includes an acquirer 11, a skin temperature estimator 12, a clothing amount estimator 13, a heat loss amount estimator 14, a metabolic amount estimator 15, a subtractor 16 and a thermal sensation estimator 17 (refer to FIG. 1). The skin temperature estimator 12 includes a calculator 121 and a corrector 122.

(2-1) Acquisition of Surface Temperature Information

The acquirer 11 is configured to acquire surface temperature information about clothing of a user. The surface temperature information is information about a surface temperature of the clothing. The surface temperature information in the present embodiment is information that represents a temperature of a surface region in a part of the clothing but should not be construed as limiting. The surface temperature information may be, for example, information that represents a temperature distribution in a surface of the whole of the clothing.

The part of the clothing, which is an acquisition target of the surface temperature information, is usually assumed to be a part covering a chest of the user's body but should not be construed as limiting. The part of the clothing may be, for example, a part covering an arm(s) of the user, a part covering a leg(s) of the user, or any other part.

The acquirer 11 is configured to acquire the surface temperature information based on a thermal image captured by a thermal camera 301 (i.e., a thermography camera) disposed at a place to capture the thermal image of the user, for example.

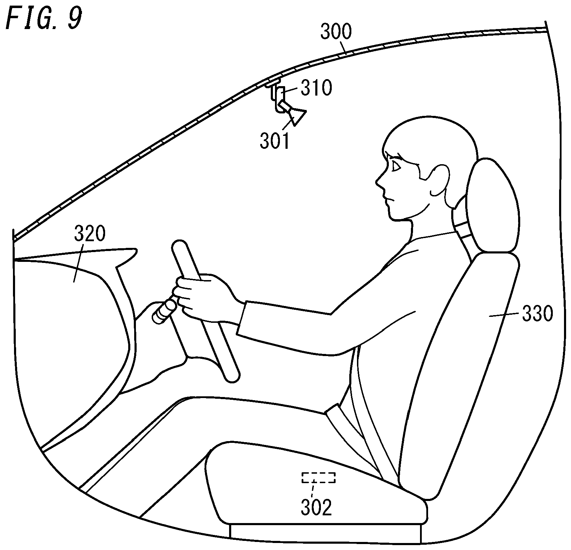

More specifically, for example as shown in FIG. 9, the thermal camera 301 is disposed at a room mirror 310 in the car 300. When the user is seated on the seat 330, the thermal camera 301 captures the thermal image including an upper body of the user and the surroundings of the upper body, and outputs the thermal image thus captured.

For example, human body information is stored in a memory (not shown). The human body information is information about a human body. For example, the human body information includes various kinds of information representing shapes, sizes (such as a long diameter, a short diameter and a surface area) and arrangements, related to a plurality of parts constituting the human body. Also, the human body information may further include information about features (such as a body shape and a hairstyle) depending on sex and features (such as the number of wrinkles and a percentage of gray hair) depending on age.

Note that, the memory (not shown) described above is usually assumed to be a memory provided in the thermal sensation estimation device 1 but should not be construed as limiting. The memory may be a memory provided in an external device (not shown) communicable with the thermal sensation estimation device 1. As long as the memory, which stores therein various kinds of information as the human body information and first correspondence information to sixteenth information (described later), can be accessed by a processor(s) of the thermal sensation estimation device 1, the location of the memory is not limited in particular. Needless to say, the above kinds of information may be stored in a single memory or dispersively stored in a plurality of memories.

The acquirer 11 performs contour detection on the thermal image described above and cuts out a thermal image in a range corresponding to the upper body of the user. Next, the acquirer 11 divides the thermal image thus cut out into two or more image parts corresponding to the head, the torso, and the arms, using the human body information described above, and estimates a region of an upper half or an upper third of an image part corresponding to the torso, as the chest. Then, the acquirer 11 acquires information about a temperature at a representative point (for example, the center of gravity) of the chest thus estimated, as the surface temperature information about the part corresponding to the chest, of the clothing. Alternatively, the average value of surface temperatures in the chest region may be acquired as the surface temperature information.

Note that, the acquirer 11 is also configured to acquire, based on the thermal image, the surface temperature information about parts other than the part corresponding to the chest, of the clothing.

(2-2) Estimation of Skin Temperature

The skin temperature estimator 12 is configured to estimate a skin temperature of a clothed portion of the user's body.

The clothed portion includes one or more parts (e.g., the chest, the arms and the legs) covered with the clothing, of a plurality of parts (e.g., the head, the chest, the arms and the legs) constituting the user's body.

The clothed portion to be estimated by the skin temperature estimator 12 is a part of the user's body (a clothed portion corresponding to the surface region described above) covered with the part of the clothing, and is, for example, the chest. Because the chest is close to internal organs, the skin temperature of the chest is closer to the body temperature than any of the skin temperatures of other parts of the body is. When the user is healthy, the body temperature does not change much, and accordingly, the skin temperature of the chest also does not change much. Needless to say, the body temperature is the temperature at the depth of the body. However, the estimation target of the skin temperature may be any part such as the arms or the legs, as long as it is the part covered with the clothing.

The skin temperature estimator 12 in the present embodiment is configured to estimate the skin temperature of the clothed portion (e.g., the chest) of the user's body based on a skin temperature of a non-clothed portion of the user's body, for example. The non-clothed portion is a part (e.g., the head), which is not covered with the clothing, of the plurality of parts of the user's body.

The non-clothed portion to be used for estimating the skin temperature of the chest is preferably the forehead of the head. Because the forehead is close to the brain, the temperature of the forehead is not as close to the body temperature as the temperature of the chest, but comparatively close to the body temperature. Therefore, the skin temperatures of the chest and the head (forehead) have a strong correlation to each other.

Specifically, for example, the memory (not shown) stores therein the first correspondence information. The first correspondence information is information on the correspondence between skin temperatures of the non-clothed portion and skin temperature estimation values of the clothed portion. The first correspondence information includes, for example, a plurality of sets, each of which includes a pair of: a skin temperature of the forehead as the non-clothed portion; and a skin temperature estimation value of the chest as the clothed portion, and specifically, may be a data table including "(30 degrees, 33.5 degrees), (31 degrees, 34 degrees), (32 degrees, 35 degrees), ..." and the like. For example, if the skin temperature of the forehead is 30 degrees, the skin temperature estimation value is estimated to be 33.5 degrees.

Alternatively, the first correspondence information may be an algorithm (e.g., a function such as "T = t - t0; t0 = 1.5"), to which the skin temperature (t) of the non-clothed portion is input, and from which the skin temperature estimation value (T) of the clothed portion is output, and the form of the first correspondence information is not limited in particular. The predetermined value t0 is not limited to 1.5 degrees, but may be a value between 1 degree to 2 degrees (e.g., "1.2" or "1.8" or any other value), a value less than 1 degree, or a value more than 2 degrees. Because the skin temperature is strongly affected by both the body temperature and the interior temperature, the function described above may have, as a parameter, the interior temperature in addition to the skin temperature (t) of the non-clothed portion.

The skin temperature estimator 12 acquires, for example, the skin temperature of the non-clothed portion (forehead) based on the thermal image captured by the thermal camera 301 described above. Next, the skin temperature estimator 12 acquires the skin temperature estimation value of the clothed portion (chest), corresponding to the skin temperature of the non-clothed portion acquired, using the first correspondence information. For example, if the skin temperature of the forehead is 32 degrees, the skin temperature estimator 12 acquires "35 degrees" as the skin temperature estimation value of the clothed portion, corresponding to 32 degrees.

In the present disclosure, "estimating" may be, for example, acquiring one of a plurality of estimation values prepared in advance using a data table, or may be calculating an estimation value using an algorithm. Needless to say, in acquiring the estimation value using the data table, "corresponding" is not limited to a case that a target exactly matches a value in the data table, but may include a case that the target is closest to the value, or a case that a difference between the target and the value is less than a threshold. Furthermore, the algorithm may be a function or an algorithm utilizing artificial intelligence such as machine learning.

The first correspondence information is not essential. The skin temperature estimator 12 may estimate, for example, the temperature of the chest as a fixed value. The fixed value is, for example, 35 degrees, but not limited thereto.

Furthermore, the skin temperature estimator 12 is configured to estimate the skin temperature even for the clothed portion other than the chest. For example, regarding the arms or the legs, the skin temperature estimator 12 may acquire, as the surface temperature information in the part of the clothing covering the arms or the legs, a value obtained by subtracting a predetermined value (e.g., 2.5 degrees) from the skin temperature of the forehead as the non-clothed portion.

As described in detail in a variation of the embodiment, blood vessels in peripheral parts as the arms and the legs contract/expand in response to the thermal sensation, and accordingly, the skin temperatures of the peripheral parts decrease/increase in response to the contraction and the expansion of the blood vessels. Therefore, the skin temperature estimator 12 may first estimate the skin temperature of the chest where the change of the skin temperature in response to the thermal sensation is relatively small and then obtain temporary thermal sensation based on the skin temperature of the chest, using the manner described below. The skin temperature estimator 12 may estimate the skin temperatures of the arms and/or the legs in accordance with the temporary thermal sensation, and determine the final thermal sensation based on the skin temperatures of the arms and/or the legs thus estimated.

Thus, the skin temperature estimator 12 can more easily and more accurately estimate the skin temperature of the clothed portion by utilizing the skin temperature of the non-clothed portion.

(2-3) Correction of Skin Temperature Estimation Value

The skin temperature estimator 12 may correct the skin temperature estimation value acquired as described above, using a value related to subcutaneous fat of the user.

Specifically, the calculator 121 as one of components of the skin temperature estimator 12 is configured to calculate a subcutaneous fat value. The subcutaneous fat value is a value related to subcutaneous fat of the user. In the present embodiment, Body Mass Index (BMI) is substituted for the subcutaneous fat value, but should not be construed as limiting. For example, in place of BMI, a subcutaneous fat rate, a body fat rate, etc. may be substituted.

For example, the skin temperature estimator 12 obtains, as height data, an estimation value of the height of the user, using the thermal image captured by the thermal camera 301, and obtains, as weight data, an estimation value of the body weight of the user, using output result of a pressure sensor 302 (refer to FIG. 9) disposed at the seat 330 on which the user is seated. The skin temperature estimator 12 then calculates the subcutaneous fat value, using the estimation value of the body weight and the estimation value of the height.

The corrector 122 is configured to correct the skin temperature estimation value obtained by the skin temperature estimator 12 in accordance with the subcutaneous fat value calculated by the calculator 121. Specifically, the more subcutaneous fat is, the lower the skin temperature is. Therefore, for example, the corrector 122 calculates a correction amount by an increase function using the subcutaneous fat value as a variable, and subtracts the correction amount thus calculated from the skin temperature estimation value to obtain the skin temperature estimation value corrected in accordance with the subcutaneous fat value.

Thus, correcting the skin temperature estimation value based on the subcutaneous fat value can reduce a difference in the skin temperature due to the amount of the subcutaneous fat of the user, and as a result, the thermal sensation can be more accurately estimated.

Note that, the calculator 121 and the corrector 122 are not essential, and the calculation of the subcutaneous fat value and the correction of the skin temperature estimation value based on the calculation result may not be performed.

(2-4) Estimation of Clothing Amount

The clothing amount estimator 13 is configured to estimate the clothing amount of the user.

The clothing amount is information about a thermal resistance (thermal insulation) of the clothing worn by the user. The thermal resistance is a value to express the difficulty of thermal conduction. The unit of the thermal resistance of the clothing is "Clo." Note that, "1 Clo" is the clothing amount as comfortable for a person in a resting condition, seated in the interior with an air temperature of 21 degrees, a humidity of 50%, and an airflow of 0.1 m/seconds, and the thermal resistance is defined as 1 Clo = 0.155 m$^2$ °C/W.

For example, the clothing amount estimator 13 estimates the clothing amount in the surface region of the user (that is, a surface region of a part, covering one clothed portion, of the surface of the clothing).

Thus, for one clothed portion (e.g., the chest), the surface temperature information about the surface region of one part of the clothing, covering the one clothed portion; the skin temperature estimation value of the one clothed portion; and the clothing amount estimation value in the surface region are obtained.

The clothing amount estimator 13 in the present embodiment is configured to estimate the clothing amount based on information about a season and a date, for example.

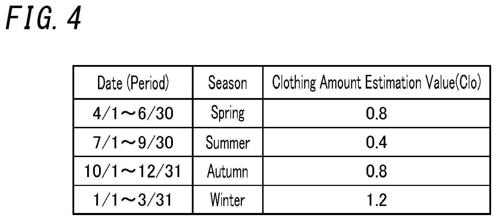

Specifically, for example, the memory (not shown) stores therein the second correspondence information as shown FIG. 4. The second correspondence information is information on the correspondence between dates, seasons and clothing amount estimation values. The second correspondence information includes, for example, a plurality of sets, each of which includes a period corresponding to a season, the season, and a clothing amount estimation value corresponding to the season.

The season is any of spring, summer, autumn and winter. The period includes two or more dates from the first day to the last day of the season. The period may be expressed by two dates: the first and the last day of the season. The clothing amount estimation value herein is a numerical value that is output as an estimation result of the clothing amount with respect to an input of at least one of the season and the date.

Specifically, the plurality of sets of the periods, the seasons and the clothing amount estimation values include "(4/1 - 6/30, spring, 0.8)," "(7/1 - 9/30, summer, 0.4)," "(10/1 - 12/31, autumn, 0.8)" and "(1/1 - 3/31, winter, 1.2)," etc.

The clothing amount estimator 13 acquires the date from an internal clock of the processor or an NTP server, acquires the season corresponding to the date using the second correspondence information, and further acquires the clothing amount corresponding to the season.

For example, when the date is December 20, the season "autumn" to corresponding the date may be acquired, and further, the clothing amount "0.8" corresponding to the season "autumn" may be acquired.

(2-4-1) First Variation for Estimation of Clothing Amount

Instead of acquiring the clothing amount estimation value corresponding to the season as described above, the clothing amount estimator 13 may acquire a weighted average in accordance with the date or the month of the date, of the four clothing amount estimation values corresponding to the four seasons (spring, summer, autumn, and winter).

In this case, the memory (not shown) may further store therein the third correspondence information (not shown). The third correspondence information is information on the correspondence between dates or months and four weighting factors. Specifically, the third correspondence information may include, for example, " f January, (0, 0, 1/3, 2/3)}, {February, (0, 0, 0, 1)}, {March, (1/3, 0, 0, 2/3)}, ... {December, (0, 0, 2/3, 1/3)}."

The clothing amount estimator 13 acquires the month included in the date, acquires four weighting factors corresponding to the month acquired, using the third correspondence information, and obtains the weighted average by respectively multiplying the four weighting factors by the four clothing amounts corresponding to the four seasons.

For example, when the date is December 20, the month "December" corresponding to the date is acquired, and the four weighting factors (0, 0, 2/3, 1/3) corresponding to the month "December" are acquired from the third correspondence information. Then, the four weighting factors (0, 0, 2/3, 1/3) are respectively multiplied by the four clothing amounts (0.8, 0.4, 0.8, 1.2) corresponding to the four seasons, and the weighted average "$0.8 \times 0 + 0.4 \times 0 + 0.8 \times (2/3) + 1.2 \times (1/3) = (14/15)$" is therefore obtained.

(2-4-2) Second Variation for Estimation of Clothing Amount

Alternatively, the clothing amount estimator 13 may estimate the clothing amount based on information on the air temperature instead of the date.

The air temperature is, for example, the current air temperature. The current air temperature, for example, is acquired from a temperature sensor installed outside of the interior. Alternatively, the air temperature may be the expected air temperature. The expected air temperature may be received from a server of a weather agency, a weather forecasting company or any other company, for example.

For example, the memory (not shown) stores therein the fourth correspondence information. The fourth correspondence information is information on the correspondence between air temperatures and clothing amount estimation values. Specifically, the fourth correspondence information includes, for example, "..., (18 degrees, 1.2 Clo), (19 degrees, 1.1 Clo), ..." and the like, but may include a function equivalent to this data, and the form of the fourth correspondence information is not limited in particular. Note that, the function may be, for example, a decreasing function to which the air temperature is input and from which the clothing amount estimation value is output.

The clothing amount estimator 13 acquires the air temperature from the temperature sensor installed outside of the interior or any other sensor and acquires the clothing amount estimation value corresponding to the air temperature, using the fourth correspondence information. For example, when the air temperature is 19 degrees, the clothing amount "1.1 Clo" corresponding to 19 degrees is acquired.

The clothing amount estimator 13 may, for example, calculate an average of the clothing amount estimation value thus acquired using the air temperature and the clothing amount estimation value acquired using the season and the date (as described above), and outputs the average as the calculation result to the heat loss amount estimator 14.

Thus, the clothing amount estimator 13 according to the present embodiment may estimate the clothing amount based on information about one or more kinds of the date and the air temperature.

(2-4-3) Third Variation for Estimation of Clothing Amount

Alternatively, the clothing amount estimator 13 may estimate the clothing amount based on the air temperature and the surface temperature in a windless condition.

In the present example, the user stays in the interior of the car 300 or a house, and the air conditioning device 2 and the temperature sensor are provided in the interior. When the user turns off the air conditioning device 2, the interior becomes windless, and therefore the air temperature of the interior in the windless condition is detected by the temperature sensor.

For example, the memory (not shown) stores therein the fifth correspondence information. The fifth correspondence information is information on the correspondence between: sets of air temperatures and surface temperatures; and clothing amount estimation values. Specifically, the fifth correspondence information includes, for example, "..., {(15 degrees, 25 degrees), 1.2 Clo}, {(15 degrees, 26 degrees), 1 Clo}, {(15 degrees, 27 degrees), 0.9 Clo}, ..., {(16 degrees, 25 degrees), 1.1 Clo}, ...," but may include a function equivalent to this data.

For example, when the temperature sensor detects the air temperature "15 degrees" in the windless condition and the acquirer 11 acquires the surface temperature "26 degrees," the clothing amount estimator 13 acquires the clothing amount "1 Clo" corresponding to the set of the air temperature and the surface temperature (15 degrees, 26 degrees), using the fifth correspondence information.

(2-4-4) Fourth Variation for Estimation of Clothing Amount

Alternatively, the clothing amount estimator 13 may estimate the clothing amount based on an image of the user captured by a visible light camera (not shown) disposed at a place to capture the image of the user.

For example, the visible light camera, if disposed in the interior of the car 300, is disposed at the room mirror 310, a dashboard 320 or any other place, and if disposed in the room of the house, is disposed on the outer surface of the air conditioning device 2 or any other surface. Alternatively, the visible light camera may be a camera of a mobile terminal which is carried by the user.

For example, the memory (not shown) stores therein the sixth correspondence information and clothing feature information. The sixth correspondence information is information on the correspondence between types of the clothing and clothing amount estimation values. The sixth correspondence information may include, for example, "(suit, 0.8 Clo), (T-shirt, 0.4 Clo), ...".

The clothing feature information is information about features of various types of clothing (e.g., suits, T-shirts, etc.). Examples of the features include a shape of an outline of the clothing, and presence or absence of a button(s).

The clothing amount estimator 13 performs image recognition based on the clothing feature information for the image captured by the visible light camera to estimate the type of clothing of the user. Then, the clothing amount estimator 13 acquires the clothing amount estimation value corresponding to the type of the clothing estimated, using the sixth correspondence information. For example, when the type of the clothing estimated is "suit", the clothing amount estimation value "0.8 Clo" corresponding to "suit" is acquired.

(2-4-5) Fifth Variation for Estimation of Clothing Amount

Alternatively, for example, a temperature sensor (not shown) may be disposed at a seat belt of the seat 330, and the clothing amount estimator 13 may estimate the clothing amount based on an output result of the temperature sensor.

In general, when the user wears the seat belt over his/her clothing, the temperature of the seat belt changes. Specifically, the temperature of the seat belt before wearing is the same as the outside temperature, for example, and is usually lower than the temperature of the clothing. After the user wears the seat belt, the temperature of the seat belt increases to be closer to the surface temperature of the clothing. The temperature of the seat belt changes at a change rate depending on the clothing amount.

The clothing amount estimator 13 calculates the change rate in the temperature of the seat belt based on the time change in the output value from the temperature sensor, for example, and estimates the clothing amount based on the change rate thus calculated.

For example, the memory (not shown) stores therein the seventh correspondence information. The seventh correspondence information is information on the correspondence between change rates in the temperature of the seat belt and clothing amount estimation values. The clothing amount estimator 13 acquires the clothing amount estimation value corresponding to the change rate calculated above, using the seventh correspondence information.

Instead of the above-described temperature sensor, the clothing amount estimator 13 may estimate the clothing amount as described above based on an output result from a thermal image sensor (which may be, for example, the thermal camera 301 provided at the room mirror 310) disposed at a place to capture an image of the seat belt.

(2-4-6) Other Variations for Estimation of Clothing Amount

The clothing amount estimator 13 may further estimate the clothing amount in another surface region (for example, a surface region of a part covering the arm(s), a surface region of a part covering the leg(s), or any other surface region) in addition to the clothing amount in the above-described surface region of the user. The clothing amount estimator 13 may estimate the clothing amount in the other surface region, as in the case of the above-described surface region. The estimation of the overall heat loss amount lost from the whole body based on the plurality of clothing amounts obtained in this manner will be described in a variation.

Alternatively, for example, the memory (not shown) stores therein the eighth correspondence information. The eighth correspondence information is information on the correspondence between clothed portions and weighting factors. The eighth correspondence information may include, for example, "(chest, 1), (arms, 0.6), (legs, 0.8), ...".

The clothing amount estimator 13 acquires, using the eighth correspondence information, a weighting factor corresponding to the clothed portion (chest) covered with the above-described surface region and a weighting factor corresponding to the clothed portion (arms or legs) covered with the other surface region. Then, the clothing amount estimator 13 may calculate the clothing amount estimation value in the other surface region by dividing the latter weighting factor by the former weighting factor and multiplying the clothing amount estimation value in the above-described surface region by the result of the division.

For example, when the clothing amount estimation value in the surface region of the part covering the chest is "0.5 Clo," the clothing amount estimation value in the surface region of the part covering the arms is calculated as "$0.5 \times (0.6/1) = 0.3$ Clo" and the clothing amount estimation value in the surface region of the part covering the legs is calculated as "$0.5 \times (0.8/1) = 0.4$ Clo."

The clothing amount estimator 13 may obtain the clothing amount of the whole body by calculating two or more clothing amount estimation values respectively corresponding to two or more portions as described above and summing them. For example, the clothing amount estimator 13 may obtain the clothing amount of the whole body "1.2 Clo" by summing the clothing amount estimation value "0.5 Clo" in the surface region of the part covering the chest, the clothing amount estimation value "0.3 Clo" in the surface region of the part covering the arms, and the clothing amount estimation value "0.4 Clo" in the surface region of the part covering the legs.

Alternatively, for example, the user may input clothing information through an input device (not shown) such as a touch panel or a keyboard, and the clothing amount estimator 13 may estimate the clothing amount based on the clothing information thus input.

The clothing information is information on the clothing of the user. The clothing information is, for example, type information. The type information is information for identifying the type of the clothing the user is wearing. The clothing amount estimator 13 acquires, using the sixth correspondence information, the clothing amount estimation value corresponding to the type of the clothing identified by the type information input.

Alternatively, the clothing information may be the clothing amount. The clothing amount estimator 13 may output the clothing amount thus input, as the clothing amount estimation value, to the heat loss amount estimator 14.

(2-5) Estimation of Heat Loss Amount

The heat loss amount estimator 14 is configured to estimate a heat loss amount lost from the user's body for the above-described surface region (or the clothed portion corresponding to the surface region), at least based on: the surface temperature information acquired by the acquirer 11; the skin temperature of the clothed portion estimated by the skin temperature estimator 12; and the clothing amount estimated by the clothing amount estimator 13.

The outside air is usually present outside the body. The outside air is present outside the clothing covering the clothed portion, and in directly contact with the skin of the non-clothed portion.

The heat loss amount can usually be calculated as a heat flux. The heat flux is the amount of heat per unit area, lost per unit time, from the surface of the body (i.e., the skin) and the unit of the heat flux is "W/m$^2$." Alternatively, the heat loss amount may be, for example, a value obtained by multiplying the heat flux by the surface area of the body (i.e., the heat loss amount lost from the whole body per unit time).

In the present embodiment, a predetermined value is used as the surface area of the body, the surface area of each part of the body, or the area ratio between parts. Alternatively, the surface area, etc. may be an estimation value estimated based on, for example, the thermal image captured by the thermal camera 301 or the image captured by the visible light camera (not shown).

The heat loss amount estimator 14 usually estimates an overall heat loss amount. The overall heat loss amount is the heat loss amount lost from the whole of the body of the user (hereafter, the whole body) to the outside of the body.

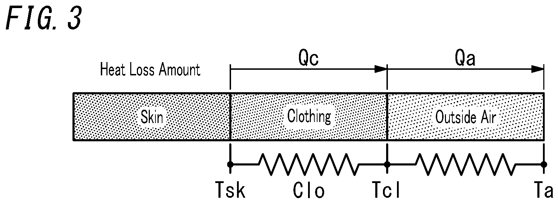

In general, when the temperature of the clothing of the user is kept constant, the heat in and out of the clothing is in equilibrium state. Therefore, as shown in FIG. 3, the heat loss amount Qc lost from the skin (for example, the skin of the chest as a first clothed portion) covered with the clothing to the clothing and the heat loss amount Qa lost from the clothing to outside air are equal to each other.

On the other hand, since the inside of the clothing (between the skin and the clothing) is less affected by wind, the heat loss amount Qc lost from the skin covered with the clothing to the clothing can be more easily estimated, compared with the heat loss amount Qa lost from the clothing to the outside air.

Therefore, the heat loss amount estimator 14, assuming Qa = Qc, estimates the amount Qc by the following Equation 1.

$$Qc = (Tsk - Tcl) / 0.155\ Clo... \text{(Equation 1)}$$

In the Equation 1, Tsk denotes the skin temperature of the clothed portion (e.g., the first clothed portion), and Tcl denotes the surface temperature of the surface region (e.g., the first surface region) corresponding to the clothed portion, of the clothing. In FIG. 3, Ta denotes the outside air temperature.

Therefore, the overall heat loss amount lost from the whole body can be obtained as a total value of: the heat loss amount lost from the clothed portion of the user's body to the clothing; and the heat loss amount lost from the non-clothed portion of the user's body to the outside of the body. The clothed portion is a set of one or more clothed portions (e.g., the chest, the arms, and the legs), and the non-clothed portion is a set of one or more non-clothed portions (e.g., the head).

The heat loss amount estimated by the heat loss amount estimator 14 is not limited to the overall heat loss amount lost from the whole body, and may be a heat loss amount lost from a part of the user's body (e.g., a clothed portion) to the outside of the body. In addition, when the surface area of the clothed portion is sufficiently larger than that of the non-clothed portion, the heat loss amount lost from the clothed portion to the clothing may be regarded as the overall heat loss amount lost from the whole body.

Specifically, in the present embodiment, the user's body includes the head, the chest, the arms, and the legs, in which three parts of the chest, the arms and the legs are the clothed portions (the first clothed portion, a second clothed portion, and a third clothed portion), and the head is the non-clothed portion. Accordingly, the clothed portion of the user's body includes a set of the chest as the first clothed portion, the arms as the second clothed portion, and the legs as the third clothed portion. The non-clothed portion of the user's body includes the head as a single non-clothed portion. The heat loss amount estimator 14 estimates the overall heat loss amount lost from the whole body, for example, as follows.

(A) Estimating a first heat loss amount lost from the first clothed portion (chest) to the clothing, and estimating the overall heat loss amount lost from the whole body based on the first heat loss amount (the present embodiment).

(B) Further estimating a second heat loss amount lost from the second clothed portion (arms) to the clothing and a third heat loss amount lost from the third clothed portion (legs) to the clothing, and estimating the overall heat loss amount from the whole body based on the first to third heat loss amounts (First variation in estimating the heat loss amount: described later).

(C) Calculating back a wind speed from the first heat loss amount, and estimating a fourth heat loss amount lost from the non-clothed portion (head) to the outside of the body, based on the wind speed, the air temperature, and the skin temperature of the non-clothed portion (head), and estimating the overall heat loss amount based on the first and fourth heat loss amounts (Second variation in estimating the heat loss amount: described later).

The chest (of the head, the chest, the arms and the legs exemplified as the plurality of parts constituting the body) is usually covered with the clothing, and it can be said that the chest is most likely to be the clothed portion. On the other hand, the arms and the legs are likely to be at least partially covered with the clothing, but in some cases may not be covered with any clothing. The head may be partially covered with the clothing, although usually not covered with the clothing.

The upper arm parts of the arms are more likely to be covered with the clothing than the forearm parts of the arms, and the thigh parts of the legs are more likely to be covered with the clothing than the lower leg parts of the legs. For this reason, the one or more clothed portions may be, for example, one or more selected from the group consisting of the chest, the upper arm parts, and the thigh parts.

The first clothed portion is any one of the one or more clothed portions constituting the body of the user. For example, the first clothed portion is preferably the chest, which is most likely to be a clothed portion, of the above-described three clothed portions (the chest, the arms and the legs). In the following description, the first clothed portion is assumed to be the chest. However, the first clothed portion may be a part such as the abdomen or the waist, as long as it is a part normally covered with the clothing.

The surface region described above (surface region of a part of the clothing) is usually the first surface region. In this case, the first surface region is a surface region of a part, covering the first clothed portion, of the clothing of the user. The surface temperature described above is the surface temperature of the first surface region. The clothing amount described above is, for example, a first clothing amount in the first surface region of the user. The heat loss amount described above is the overall heat loss amount lost from the whole body, including the heat loss amount lost from the first clothed portion.

(2-5-1A) Estimation of Overall Heat Loss Amount based on First Heat Loss Amount

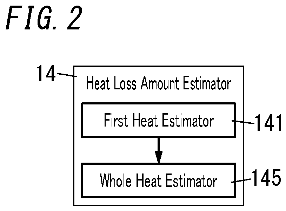

As shown in FIG. 2, the heat loss amount estimator 14 in the present embodiment includes a first heat estimator 141 and a whole heat estimator 145.

The first heat estimator 141 is configured to estimate the first heat loss amount based on information about the surface temperature of the first surface region, the skin temperature of the first clothed portion of the user's body, and the first clothing amount in the first surface region. The first heat loss amount is a heat loss amount lost from the first clothed portion to the clothing.

Specifically, regarding the first clothed portion, surface temperature information Tcl acquired by the acquirer 11, a skin temperature Tsk estimated by the skin temperature estimator 12, and a clothing amount Clo estimated by the clothing amount estimator 13 are given to the first heat estimator 141. The first heat estimator 141 substitutes the given Tsk, Tcl and Clo into the Equation 1 described above to obtain a first heat loss amount Qc lost from the first clothed portion to the clothing.

The whole heat estimator 145 is configured to estimate the overall heat loss amount based on the first heat loss amount Qc, estimated by the first heat estimator 141.

For example, the memory (not shown) stores therein a ratio $\alpha$ (where $0<\alpha<1$) of the surface area of the first clothed portion with respect to the surface area (S) of the whole body. The whole heat estimator 145 divides the first heat loss amount Qc by the ratio $\alpha$ to calculate the heat loss amount ($Qc/\alpha$) lost from two or more clothed portions including the first clothed portion (the above-described clothed portion) to the clothing.

The memory (not shown) also stores therein a ratio $\beta$ (where $0<\beta$) of the heat loss amount lost from the non-clothed portion with respect to the heat loss amount lost from the clothed portion. The whole heat estimator 145 multiplies the heat loss amount ($Qc/\alpha$) lost from the clothed portion by the ratio $\beta$ to calculate the heat loss amount $\{(Qc/\alpha)\times\beta\}$ lost from the non-clothed portion to the outside of the body.

The whole heat estimator 145 may sum the heat loss amount ($Qc/\alpha$) lost from the clothed portion and the heat loss amount $\{(Qc/\alpha)\times\beta)\}$ lost from the non-clothed portion and divide the sum by the surface area S of the whole body to obtain the overall heat loss amount $\{Qc\times(1+\beta)/(\alpha\times S)\}$.

Thus, the overall heat loss amount can be estimated based on at least the first heat loss amount, by estimating the first heat loss amount lost from the first clothed portion to the clothing based on the skin temperature of the clothed portion, the surface temperature of the surface region corresponding to the clothed portion, and the clothing amount in the surface region.

(2-5-1B) First Variation for Estimation of Heat Loss Amount: Estimation of Overall Heat Loss Amount based on Heat Loss Amount from Plurality of Clothed Portions

For example, the heat loss amount estimator 14 may further estimate the second heat loss amount lost from the second clothed portion to the clothing and the third heat loss amount lost from the third clothed portion to the clothing, in addition to the first heat loss amount lost from the first clothed portion described above to the clothing, and estimate the overall heat loss amount lost from the whole body to the clothing, based on the first to third heat loss amounts thus estimated.

The second clothed portion is any clothed portion other than the first clothed portion, of three or more clothed portions (e.g., the chest, the arms, and the legs, etc.) constituting the body of the user. Normally, the first clothed portion is the chest, and the second clothed portion is the arms or the legs. In the present first variation, unless otherwise mentioned, the second clothed portion is assumed to be the arms.

The third clothed portion is any clothed portion other than the first clothed portion and the second clothed portion, of the three or more clothed portions.

In the present first variation, it is assumed that the first clothed portion is the chest, the second clothed portion is the arms, and the third clothed portion is the legs.

(2-5-1Ba) Estimation of Overall Heat Loss Amount based on First to Third Heat Loss Amounts: Using Temporary Thermal Sensation

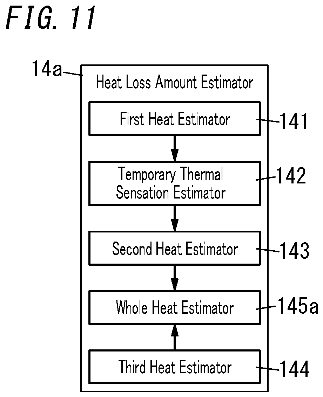

FIG. 11 shows a configuration of the heat loss amount estimator 14a in the present first variation. The heat loss amount estimator 14a is configured by adding a temporary thermal sensation estimator 142, the second heat estimator 143 and the third heat estimator 144 to the configuration of the heat loss amount estimator 14 in the embodiment (refer to FIG. 2), and further replacing the whole heat estimator 145 with a whole heat estimator 145a.

The temporary thermal sensation estimator 142 is configured to estimate temporary thermal sensation based on the first heat loss amount, estimated by the first heat estimator 141.

The temporary thermal sensation is thermal sensation of the user temporarily estimated. The temporary thermal sensation in the present embodiment is the thermal sensation based on only the heat loss amount lost from a part of the user's body (usually, the first heat loss amount). In contrast, the thermal sensation based on the overall heat loss amount lost from the whole body is true thermal sensation.

In general, the skin temperature of the arms and legs (limbs) is strongly correlated with the thermal sensation. Accordingly, the first heat loss amount lost from the first clothed portion (chest) is obtained, and then the thermal sensation is estimated based on the first heat loss amount. Thus, the heat loss amount estimated based on the first heat loss amount is the temporary thermal sensation.

Alternatively, the temporary thermal sensation estimator 142, for example, may estimate the temporary thermal sensation, using thirteenth correspondence information described later. In this case, the thermal sensation constituting the thirteenth correspondence information is regarded as the temporary thermal sensation. Specifically, for example, when the first heat loss amount is estimated to be "45W/m$^2$," the temporary thermal sensation "cool" corresponding to this value is obtained.

The skin temperature estimator 12 is further configured to estimate the skin temperature of the second clothed portion (arms) based on the temporary thermal sensation estimated by the temporary thermal sensation estimator 142. For example, the memory (not shown) stores therein ninth correspondence information. The ninth correspondence information is information on the correspondence between thermal sensation estimation values and the skin temperature estimation values of the arms. The skin temperature estimator 12 acquires a skin temperature estimation value corresponding to a temporary thermal sensation estimation value obtained, using the ninth correspondence information.

The acquirer 11 also acquires information about the surface temperature of the second surface region of the clothing based on the thermal image described above. The second surface region is a surface region of a part covering the second clothed portion, of the clothing of the user.

The clothing amount estimator 13 is further configured to estimate the second clothing amount in the second surface region of the user. The second clothing amount may be, for example, obtained by multiplying the clothing amount of the first clothed portion by a coefficient corresponding to portion.

For example, the memory (not shown) stores therein the sixth correspondence information described above. When the clothing amount estimation value of the first clothed portion is "0.8 Clo," the clothing amount estimator 13 acquires a coefficient "1" corresponding to the first clothed portion "chest" and a coefficient "0.6" corresponding to the second clothed portion "arms." Then, the clothing amount estimator 13 may obtain the second clothing amount "0.48 Clo" by multiplying "0.8 Clo" by "0.6/1."

The second heat estimator 143 is configured to estimate the second heat loss amount based on the surface temperature information of the second surface region thus obtained, the skin temperature of the second clothed portion, and the clothing amount in the second surface region. The second heat loss amount is the heat loss amount lost from the second clothed portion to the clothing.

The third heat estimator 144 is configured to estimate the wind speed and the air temperature based on a set temperature and a set wind volume of the air conditioning device 2, and estimate the third heat loss amount based on the wind speed and the air temperature thus estimated. The third heat loss amount is the heat loss amount lost from the third clothed portion (legs) into the clothing.

Specifically, the air conditioning device 2 has two air blowout ports of: an air blowout port 211 for the upper body of the user and an air blowout port (not shown) for the lower body of the user. In general, the air conditioning device 2 is set to use only the air blowout port 211 in cooling operation. The air blowout port 211 is provided with a regulating member 211a. The regulating member 211a configured to regulate a wind blowing direction of the wind from the air blowout port 211 into a range to include directions toward the first clothed portion (chest) and the second clothed portion (arms), but not to include a direction toward the third clothed portion (legs). Thus, the wind from the air blowout port 211 blows against the upper body of the user without hitting directly on the lower body of the user. The airflow around the lower body is therefore stabilized. As a result, the wind speed around the third clothed portion (legs) can be easily estimated based on the set wind volume of the air conditioning device 2.

For example, the memory (not shown) stores therein: tenth correspondence information on the correspondence between set temperatures and estimation air temperatures; and eleventh correspondence information on the correspondence between set wind volumes and estimation wind speeds. The third heat estimator 144 acquires an estimation air temperature corresponding to the set temperature, and an estimation wind speed corresponding to the set wind volume, using the tenth correspondence information and the eleventh correspondence information. The third heat estimator 144 then estimates the third heat loss amount based on the estimation air temperature and the estimation wind volume thus acquired.

For example, the human body information described above includes area information. The area information includes information about areas of two or more parts constituting a human body. For example, the area information is assumed to include information indicating the areas of the two or more parts, but may include information indicating an area ratio between parts of the two or more parts.

The whole heat estimator 145a is configured to estimate the heat loss amount lost from the clothed portion to the clothing by calculating, based on the area information, the weighted average of: the first heat loss amount lost from the first clothed portion to the clothing; the second heat loss amount lost from the second clothed portion to the clothing; and the third heat loss amount lost from the third clothed portion to the clothing, by the area ratios between the respective portions.

In addition, the whole heat estimator 145a is configured to estimate the heat loss amount lost from the non-clothed portion to the outside air based on, for example, the heat loss amount lost from the clothed portion to the clothing estimated as described above and the information such as the area ratio between the clothed portion and the non-clothed portion. Then, the whole heat estimator 145a obtains the overall heat loss amount by summing the heat loss amount lost from the clothed portion to the clothing and the heat loss amount lost from the non-clothed portion to the outside air.

The thermal sensation estimator 17 is configured to estimate the thermal sensation based on the overall heat loss amount thus estimated, thereby the true thermal sensation being obtained.

Thus, in the present first variation, the thermal sensation estimation device 1 estimates the temporary thermal sensation based on the first heat loss amount lost from the first clothed portion (chest) and estimates the skin temperature of the second clothed portion (arms) based on the temporary thermal sensation, using the fact that the skin temperature of the user's limbs is strongly correlated with the thermal sensation. The thermal sensation estimation device 1 acquires the surface temperature information and the clothing amount in the surface region corresponding to the second clothed portion, and estimates the second heat loss amount based on the skin temperature, the surface temperature information, and the clothing amount.

On the other hand, the regulating member 211a (provided at the air blowout port 211 of the air conditioning device 2) prevents the wind from directly hitting on the third clothed portion (legs). Accordingly, the thermal sensation estimation device 1 estimates the third heat loss amount lost from the third clothed portion, based on the set temperature and the set wind volume of the air conditioning device 2. Furthermore, the thermal sensation estimation device 1 estimates the thermal sensation again based on the first to third heat loss amounts to obtain the true thermal sensation. Thus, the overall heat loss amount lost from the whole body can be easily estimated with higher accuracy by using the first to third heat loss amounts.

(2-5-1Bb) Another Estimation Method for Third Heat Loss Amounts

For example, when the air conditioning device 2 is an air conditioner installed in the living room, the airflow around the lower body of the user may be more unstable than that in the example of the air conditioning device 2 installed in the interior of the car. In such a case, the third heat estimator 144 may estimate the third heat loss amount based on the second heat loss amount estimated by the second heat estimator 143, for example.

Specifically, the third heat estimator 144 obtains the area ratio of the area of the third clothed portion (legs) to the area of the second clothed portion (arms) by using, for example, the area information described above. The third heat estimator 144 multiplies the second heat loss amount estimated by the second heat estimator 143 by the area ratio thus obtained to obtain the third heat loss amount.

Alternatively, for example, another thermal camera (not shown) may be further provided at a place to capture a thermal image of the lower body of the user. The acquirer 11 may acquire the surface temperature of the third clothed portion (legs), using the thermal image captured by the other thermal camera. Thereafter, in the same manner as in the case of the first clothed portion or the second clothed portion, the skin temperature estimator 12 may estimate the skin temperature of the third clothed portion, and the clothing amount estimator 13 may estimate the clothing amount in the surface region corresponding to the third clothed portion, of the clothing. The third heat estimator 144 may estimate the third heat loss amount, based on the surface temperature, the skin temperature and the clothing amount, related to the third clothed portion.

(2-5-1Bc) Estimation of Overall Heat Loss Amount based on First and Second Heat Loss Amounts

In the first variation, the third heat estimator 144 may be excluded from the configuration of the heat loss amount estimator 14a shown in FIG. 11. That is, the heat loss amount estimator 14a may estimate the overall heat loss amount, using only the first and second heat loss amounts without the estimation of the third heat loss amount based on the third clothed portion.

The whole heat estimator 145a may estimate the overall heat loss amount by, for example, calculating the weighted average in accordance with the area ratio between two or more portions including the first and second clothed portions based on the first and second heat loss amounts.

For example, it is assumed that the first heat loss amount corresponding to the first clothed portion (chest) is Q1 and the second heat loss amount corresponding to the second clothed portion (arms) is Q2, and the ratio "a:b" of the surface area between the first and second clothed portions is acquired from the area information described above. In this case, the overall heat loss amount may be calculated as "$(Q1 \times a + Q2 \times b)/(a + b)$," for example.

Thus, the overall heat loss amount lost from the whole body can be accurately estimated by using the first and second heat loss amounts.

(2-5-1C) Second Variation for Estimation of Heat Loss Amount: Estimation of Overall Heat Loss Amount Based on Heat Loss Amount lost from Clothed Portion and Non-Clothed Portion

The non-clothed portion in the second variation is the head (in particular, the forehead).

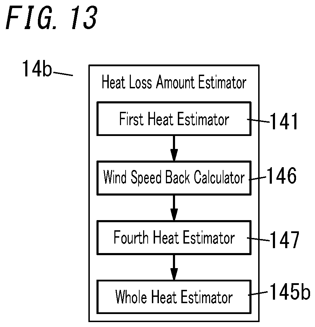

A heat loss amount estimator 14b in the second variation is shown in FIG. 13. The heat loss amount estimator 14b is configured by adding a wind speed back calculator 146 and a fourth heat estimator 147 and by replacing the whole heat estimator 145 with a whole heat estimator 145b with respect to the heat loss amount estimator 14 (refer to FIG. 2) in the embodiment.

The wind speed back calculator 146 is configured to calculate back the wind speed from the first heat loss amount estimated by the first heat estimator 141.

For example, the memory (not shown) stores therein twelfth correspondence information (such as a data table or a function) on the correspondence between wind speeds and first heat loss amounts. The wind speed back calculator 146 obtains, based on the twelfth correspondence information, the wind speed corresponding to the first heat loss amount estimated.

Assuming that the non-clothed portion (head) is exposed to the blowing air with a speed equivalent to the wind speed calculated back by the wind speed back calculator 146, the fourth heat estimator 147 estimates a fourth heat loss amount based on the wind speed, the wind temperature, and the skin temperature of the head. The fourth heat loss amount is a heat loss amount lost to the outside air from the head as the non-clothed portion. The air temperature (wind temperature) of the outside air is assumed to be measured, for example, by a temperature sensor in the interior, but may be acquired from the air conditioning device 2.

The whole heat estimator 145b is configured to estimate the overall heat loss amount lost from the whole body, based on the first heat loss amount estimated by the first heat estimator 141 and the fourth heat loss amount estimated by the fourth heat estimator 147.

Specifically, the whole heat estimator 145b calculates the area ratio (>1) of the area of the clothed portion to the area of the first clothed portion, using, for example, the area information described above, and calculates the heat loss amount lost from the clothed portion to the clothing by multiplying the first heat loss amount by the area ratio. Next, the whole heat estimator 145b adds the fourth heat loss amount to the heat loss amount thus calculated (from the clothed portion to the clothing) to obtain the overall heat loss amount.

Alternatively, the whole heat estimator 145b may calculate the weighted average of two or more portions including the first clothed portion and the non-clothed portion in accordance with the presence or absence of the clothing and the area ratio between the two or more portions, based on the first and fourth heat loss amounts, the area ratio, and a coefficient in accordance with the presence or absence of the clothing. The whole heat estimator 145b may determine the presence or absence of the clothing for each of the two or more portions based on, for example, a change in the surface temperature (for example, whether the change is steep or slow) in response to the blowing air.

Thus, the overall heat loss amount can be accurately estimated by using the first and fourth heat loss amounts, that is, by calculating back the wind speed from the first heat loss amount lost from the first clothed portion (chest) and estimating the fourth heat loss amount lost from the non-clothed portion (head) based on the wind speed, the air temperature, and the skin temperature of the non-clothed portion (head).

(2-6) Estimation of Thermal Sensation

The thermal sensation estimator 17 is configured to estimate the thermal sensation of the user based on the heat loss amount, estimated by the heat loss amount estimator 14.

For example, the memory (not shown) stores therein thirteenth correspondence information. The thirteenth correspondence information is information on the correspondence between estimation values of the heat loss amounts and thermal sensation estimation values. The thirteenth correspondence information includes, for example, "($50 \ W/m^2$, cold), ($45 \ W/m^2$, cool), ($35 \ W/m^2$, comfortable), ($25 \ W/m^2$, warm), ($20 \ W/m^2$, hot), ...," but

may include a function equivalent to this data.

When the heat loss amount estimator 14 obtains the estimation value "50 W/m$^2$" of the heat loss amount, the clothing amount estimator 13 acquires, for example, the thermal sensation estimation value "cold" corresponding to the heat loss amount, using the thirteenth correspondence information.

For example, when the estimation value of the heat loss amount after subtraction is an intermediate value of "50 W/m$^2$" and "45 W/m$^2$" or a value close to the intermediate value, the whole heat estimator 145 (or 145a, or 145b) may obtain "a little cold" as an intermediate value between: the thermal sensation estimation value "cold" corresponding to the estimation value "50 W/m$^2$" of the heat loss amount; and the thermal sensation estimation value "cool" corresponding to the estimation value "45 W/m$^2$" of the heat loss amount.

(2-7) Estimation of Thermal Sensation Considering Metabolic Amount

The thermal sensation in human is "comfortable" when the heat loss amount and is substantially equal to the metabolic amount. Therefore, in the present embodiment, the estimation value of the metabolic amount is subtracted from the estimation value of the heat loss amount, and the estimation value of the heat loss amount after subtraction is output to the thermal sensation estimator 17.

Specifically, the metabolic amount estimator 15 is configured to estimate the metabolic amount of the user. The metabolic amount is an amount of heat required for human activity. The metabolic amount is usually represented as a Basal Metabolic Rate (BMR). The BMR corresponds to the minimum amount of heat required to sustain human life. The metabolic amount estimator 15 estimates the metabolic amount by, for example, any one of the following manners.

(a) The memory (not shown) stores therein fourteenth correspondence information on the correspondence between sexes and estimation values of metabolic amounts. The metabolic amount estimator 15 estimates the sex of the user, using the image captured by the visible light camera (not shown) described above, and obtains the estimation value of the metabolic amount corresponding to the sex, using the fourteenth correspondence information.

(b) The memory (not shown) stores therein fifteenth correspondence information on the correspondence between ages and estimation values of metabolic amounts. The metabolic amount estimator 15 estimates the age of the user, using the image captured by the visible light camera, and obtains the estimation value of the metabolic amount corresponding to the age, using the fifteenth correspondence information.

(c) The memory (not shown) stores therein sixteenth correspondence information on the correspondence between: sets of sexes and ages; and estimation values of metabolic amounts. The metabolic amount estimator 15 estimates the sex and age of the user, using the image captured by the visible light camera, and obtains the estimation value of the metabolic amount corresponding to the sex and age, using the sixteenth correspondence information.

The estimation value of the metabolic amount obtained by the metabolic amount estimator 15 is converted into an amount of heat per unit area, lost from the body surface of the user per unit time, and the amount of heat thus converted is then output to the subtractor 16.

The subtractor 16 subtracts the estimation value of the metabolic amount, obtained by the metabolic amount estimator 15, from the estimation value of the overall heat loss amount, obtained by the whole heat estimator 145 (or 145a, or 145b).

The thermal sensation estimator 17 estimates the thermal sensation based on the estimation value of the overall heat loss amount after subtraction by the subtractor 16.

For example, in place of the thirteenth correspondence information described above, the memory (not shown) stores therein thirteenth correspondence information considering the metabolic amount. The thirteenth correspondence information considering the metabolic amount includes, for example, "(15 W/m$^2$, cold), (10 W/m$^2$, cool), (0 W/m$^2$, comfortable), (-10 W/m$^2$, warm), and (-15 W/m$^2$, hot)."

For example, when the whole heat estimator 145 (or 145a, or 145b) obtains the estimation value "35 W/m$^2$" of the overall heat loss amount, and the estimation value of the heat loss amount after the subtraction by the subtractor 16 is "-10 W/m$^2$," the thermal sensation estimator 17 obtains "warm" as the thermal sensation estimation value corresponding to the estimation value "-10 W/m$^2$" of the heat loss amount after the subtraction, using the thirteenth correspondence information considering the metabolic amount. Also when the estimation value "50 W/m$^2$" of the overall heat loss amount is obtained, and the estimation value of the heat loss amount after the subtraction by the subtractor 16 is "15 W/m$^2$," the thermal sensation estimator 17 acquires "cold" as the thermal sensation estimation value corresponding to the estimation value "15 W/m$^2$" of the heat loss amount after the subtraction, using the thirteenth correspondence information considering the metabolic amount.

For example, when the estimation value of the heat loss amount after the subtraction is an intermediate value between "15 W/m$^2$" and "10 W/m$^2$" or a value close to the intermediate value, the whole heat estimator 145 (or 145a, or 145b) may acquire "a little cold" as the intermediate value between: "cold" as the thermal sensation estimation value corresponding to the estimation value "15 W/m$^2$" of the heat loss amount; and "cool" as the thermal sensation corresponding to the estimation value

"10 W/m$^2$" of the heat loss amount.

Thus, the thermal sensation estimation value obtained by the thermal sensation estimator 17 or the thermal sensation estimation value after the subtraction by the subtractor 16 is output to the air conditioning device 2.

(3) Air Conditioning Device

The air conditioning device 2 according to the embodiment of the present disclosure includes an air conditioning unit 21 and an air conditioning controller 22. The air conditioning device 2 further includes a memory (not shown) which stores therein various set values related to a wind volume, a wind temperature and any other factors, set by the user.

The air conditioning unit 21 includes, for example, a fan, a motor for driving the fan, and a compressor, and is configured to blow out wind in which at least one of the wind volume or the wind temperature is adjusted in accordance with the various set values described above.

In addition to at least one of the wind volume or the wind temperature, the air conditioning unit 21 may blow out the wind in which a humidity, a wind direction and any other factors are adjusted. The wind direction may be changed at any time by the user manually changing a direction of a blade plate of the regulating member 211a.

The air conditioning controller 22 is configured to control the air conditioning unit 21 based on the thermal sensation estimation value received from the thermal sensation estimation device 1.

For example, the air conditioning controller 22 may temporarily change the various set values in accordance with the thermal sensation estimated, and may adjust at least one of the wind volume or the wind temperature based on the set values changed.

Alternatively, the air conditioning controller 22 may output, from at least one of a display and a speaker provided in the car, information for prompting the user to manually move the regulating member 211a to change the wind direction, or information for suggesting the user to open or close the window of the car.

Thus, the air conditioning control device estimates, with high accuracy, the thermal sensation including the influence of the blowing air without measurement of the wind speed, and controls the air conditioning device 2 based on the thermal sensation estimated, which can improve the comfort of the user by a simple configuration.

(4) Operation of Air Conditioning System

Next, how the air conditioning system 100 configured as above operates will be described. Hereinafter, the process flows of the units of the air conditioning device 2 (cooperation among the components) will be mainly described, and the detailed operation of each unit will be omitted.

(4-1) Operation of Thermal Sensation Estimation Device

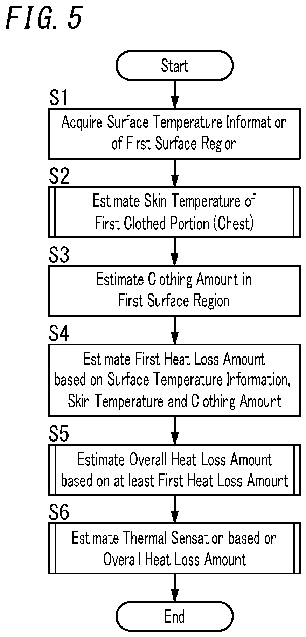

How the air conditioning device 2 according to the embodiment of the present disclosure operates will be described with reference to flowcharts shown in FIGS. 5 to 7.

The acquirer 11 (in Step S1) acquires the surface temperature information of the first surface region corresponding to the first clothed portion (chest), using the thermal image captured by the thermal camera 301.

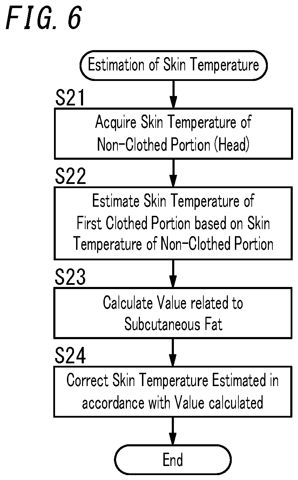

Next, the skin temperature estimator 12 (in Step S2) estimates the skin temperature of the first clothed portion. The estimation of the skin temperature in Step S2 will be described with reference to the flowchart of FIG. 6.

Next, the clothing amount estimator 13 (in Step S3) estimates the clothing amount in the first surface region. For example, the clothing amount estimator 13 may acquire the date from the built-in clock, acquire the season corresponding to the date using the second correspondence information stored in the memory, and acquire the clothing amount corresponding to the season.

Next, the first heat estimator 141 of the heat loss amount estimator 14 (in Step S4) estimates the first heat loss amount lost from the first clothed portion to the clothing based on the surface temperature information of the first surface region, acquired in Step S1, the skin temperature of the first clothed portion, estimated in Step S2, and the clothing amount in the first surface region, estimated in Step S3.

Next, the whole heat estimator 145 (in Step S5) estimates the overall heat loss amount lost from the whole body based on at least the first heat loss amount, estimated in Step S4.

The thermal sensation estimator 17 then (in Step S6) estimates the thermal sensation based on the overall heat loss amount, estimated in Step S5. The processing is then ended.

In the flowchart shown in FIG. 5, for example, Step S5 may be omitted, and in Step S6, the overall heat loss amount may be estimated based on the first heat loss amount.

The estimation of the skin temperature in Step S2 is performed according to the flowchart of FIG. 6.

The acquirer 11 (in Step S21) acquires the skin temperature of the non-clothed portion (head), using the thermal image captured by the thermal camera 301.

The skin temperature estimator 12 (in Step S22) estimates the skin temperature of the first clothed portion based on the skin temperature of the non-clothed portion, acquired in Step S21, for example, using the first correspondence information stored in the memory.

The calculator 121 (in Step S23) estimates the height and body weight of the user, using the thermal image captured by the thermal camera 301 and the output result of the pressure sensor 302, and calculates the subcutaneous fat value (e.g., BMI) based on the height and body weight estimated.

The corrector 122 (in Step S24) corrects the skin temperature of the first clothed portion, estimated in Step S22, in accordance with the subcutaneous fat value calculated in Step S23. Then the processing returns to the higher-order processing.

Although not shown, the estimation for heat loss from the whole body in Step S5 is performed as follows in the present embodiment.

The whole heat estimator 145 (in Step S5A) calculates the heat loss amount lost from the clothed portion including the first clothed portion to the clothing by dividing the first heat loss amount, estimated in Step S4, by the ratio $\alpha$ stored in the memory.

Next, the whole heat estimator 145 (in Step S5B) calculates the heat loss amount lost from the non-clothed portion to the outside of the body by multiplying the heat loss amount lost from the clothed portion to the clothing, calculated in Step S5A, by the ratio $\beta$ stored in the memory.

The whole heat estimator 145 then (in Step S5C) sums the heat loss amount lost from the clothed portion, calculated in Step S5A, and the heat loss amount lost from the non-clothed portion, calculated in Step S5B, and divides the sum by the surface area of the body to obtain the overall heat loss amount lost from the whole body.

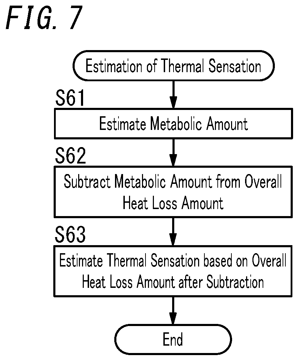

The estimation of the thermal sensation in Step S6 described above is performed according to the flowchart of FIG. 7.

The metabolic amount estimator 15 (in Step S61) estimates the sex and age of the user, using the human body information stored in the memory, based on the image captured by the visible light camera, and estimates the metabolic amount corresponding to the sex and age thus estimated, using the eleventh correspondence information stored in the memory.

The subtractor 16 (in Step S62) subtracts the metabolic amount estimated in Step S61 from the overall heat loss amount, estimated in Step S5.

The thermal sensation estimator 17 (in Step S63) estimates the thermal sensation based on the overall heat loss amount after the subtraction in Step S62. Then, the processing returns to the higher-order processing.

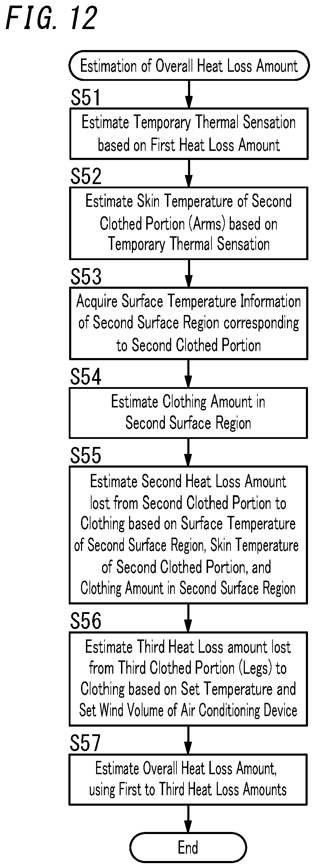

In the first variation of (2-5-1B) described above, the estimation of the overall heat loss amount in Step S5 is performed according to the flowchart shown in FIG. 12.

The temporary thermal sensation estimator 142 (in Step S51) estimates the temporary thermal sensation based on the first heat loss amount, estimated in Step S4.

The skin temperature estimator 12 (in Step S52) estimates the skin temperature of the second clothed portion (arms) based on the temporary thermal sensation estimated in Step S51.

The acquirer 11 (in Step S53) acquires information on the surface temperature of the second surface region corresponding to the second clothed portion, using the thermal image captured by the thermal camera 301.

The clothing amount estimator 13 (in Step S54) estimates the clothing amount in the second surface region based on, for example, the clothing amount in the first surface region, estimated in Step S3, and the area ratio between the areas of the first and second clothed portions.

The second heat estimator 143 (in Step S55) estimates the second heat loss amount lost from the second clothed portion to the clothing based on the skin temperature of the second clothed portion, estimated in Step S52, the surface temperature of the second surface region, acquired in Step S53, and the clothing amount in the second surface region, estimated in Step S54.

The third heat estimator 144 (in Step S56) estimates the third heat loss amount lost from the third clothed portion (legs) to the clothing based on the set temperature and the set wind volume of the air conditioning device 2.

The whole heat estimator 145a (in Step S57) estimates the overall heat loss amount based on the first heat loss amount, estimated in Step S4, the second heat loss amount, estimated in Step S55, and the third heat loss amount, estimated in Step S56. Then the processing returns to the higher-order processing.

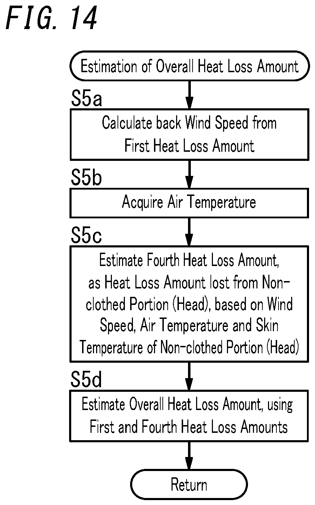

Furthermore, in the second variation of (2-5-1C) described above, the estimation of heat loss from the whole body in Step S5 is performed according to the flowchart of FIG. 14.

The wind speed back calculator 146 (in Step S5a) calculates back the wind speed from the first heat loss amount, estimated in Step S4. The clothing amount estimator 13 (in Step S5b) acquires the air temperature from the temperature sensor.

The fourth heat estimator 147 (in Step S5c) estimates the fourth heat loss amount, as the heat loss amount lost from the non-clothed portion (head), based on the wind speed estimated in Step S5a, the air temperature acquired in Step S5b, and the skin temperature of the non-clothed portion (head) obtained by the thermal camera 301 in Step S21 (refer to FIG. 6).

The whole heat estimator 145b then (in Step S5d) estimates the overall heat loss amount, based on the first heat loss amount, estimated in Step S4, and the fourth heat loss amount, estimated in Step S5c. Then the processing returns to the higher-order processing.

(4-2) Operation of Air Conditioning Device

Although not shown, the air conditioning device 2 according to the embodiment of the present disclosure operates as follows.

The air conditioning unit 21 of the air conditioning device 2 operates to adjust at least one of the wind volume or the wind temperature in accordance with various set values stored in the memory and blow out the wind thus adjusted.

When receiving the thermal sensation estimation value from the thermal sensation estimation device 1, the air conditioning controller 22 controls the air conditioning unit 21 based on the thermal sensation.

For example, the air conditioning controller 22 temporarily changes the various set values in accordance with the thermal sensation estimation value, and the air conditioning unit 21 adjusts at least one of the wind volume or the wind temperature based on the set values changed.

(5) Usage Example of Air Conditioning System

(5-1) Usage Example in Car

The air conditioning system 100 according to the embodiment of the present disclosure is provided in the dashboard 320 below the windshield, in the car 300, for example, as shown in FIGS. 8 to 10. The user is seated on the seat 330 in the interior of the car 300.

The arrangement in FIGS. 8 to 10 is exemplary only, and the air conditioning system 100 may be provided anywhere in the car 300, such as a console (not shown). Furthermore, the thermal sensation estimation device 1 and the air conditioning device 2 of the air conditioning system 100 may be distributed in the interior such that, for example, the former is provided in the console (not shown) and the latter is provided in the dashboard 320. In this case, the thermal sensation estimation device 1 and the air conditioning device 2 are connected to be communicated with each other by wired or near-range radio communication.

The air conditioning device 2 is provided with various buttons to be operated by the user to set the wind temperature, the wind volume or any other factors desired by the user. The air conditioning device 2 is basically configured to blow out the wind at the wind temperature and the wind volume, which are set manually by the user. Especially, the air conditioning device 2 adjusts at least one of the wind volume or the wind temperature, which are set by the user, in accordance with the thermal sensation of the user, and blows out the wind adjusted.

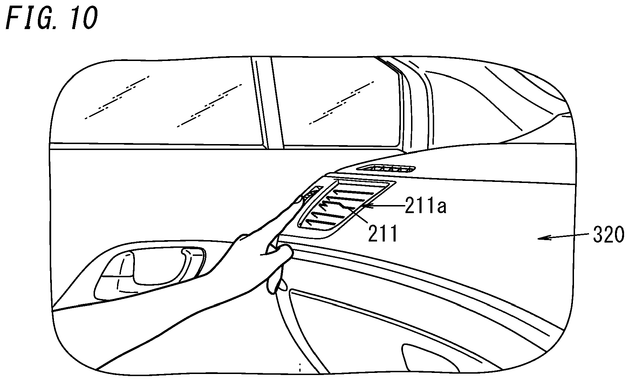

The air blowout port 211 of the air conditioning device 2 is disposed in each of the left and right ends of the front face of the dashboard 320, as shown in FIG. 10. Each air blowout port 211 is provided with the regulating member 211a. Each regulating member 211a is a member (louver) that regulates the direction of the wind blowing out of the corresponding air blowout port 211. Each regulating member 211a includes a plurality of elongated plate-like members (blade plates) arranged in parallel and configured to change the orientation of the blade plates in response to the user's manual operation, or automatically.

When the air conditioning system 100 is activated, the acquirer 11 acquires the surface temperature information (Tcl) of the first surface region corresponding to the chest, using the thermal image captured by the thermal camera 301. It is herein assumed that the surface temperature information "Tcl = 25 degrees" of the first surface region is acquired.

Next, the skin temperature estimator 12 estimates the skin temperature (Tsk) of the chest as follows. First, the acquirer 11 acquires the skin temperature of the non-clothed portion (head), using the thermal image captured by the thermal camera 301. It is herein assumed that the skin temperature "33 degrees" of the head is acquired. The skin temperature estimator 12 obtains the skin temperature estimation value "Tsk = 34 degrees" of the chest corresponding to the skin temperature "33" of the head acquired, using the first correspondence information stored in the memory.

Next, the calculator 121 estimates the height and body weight of the user, using the thermal image captured by the thermal camera 301 and the output result of the pressure sensor 302, and calculates the subcutaneous fat value (BMI) based on the height and body weight estimated. The corrector 122 calculates the correction amount in accordance with the BMI and subtracts the correction amount from the skin temperature estimation value "Tsk = 35 degrees" of the chest. It is herein assumed that the correction amount is zero and therefore the skin temperature estimation value of the chest remains "Tsk = 35 degrees."

Next, the clothing amount estimator 13 estimates the clothing amount (Clo) in the first surface region as follows. For example, when the date is December 20, four weighting factors (0, 0, 2/3, 1/3) corresponding to "December" are obtained, using the third correspondence information. The four weighting factors obtained are multiplied by four clothing amounts (0.8, 0.4, 0.8, 1.2) corresponding to the four seasons. Therefore, the weighted average "$0.8 \times 0 + 0.4 \times 0 + 0.8 \times (2/3) + 1.2 \times (1/3) = (14/15)$ Clo" is obtained.

Next, the first heat estimator 141 substitutes, into the Equation 1 described above, the surface temperature information "Tcl = 25 degrees" of the first surface region, the skin temperature estimation value "Tsk = 35 degrees" of the chest, and the clothing amount "(14/15) Clo" in the first surface region to obtain the estimation value of the first heat loss amount lost from the first clothed portion to the clothing. Here, Qc = (34 - 25 degrees)/($0.155 \times 15/14$) = 54.2 W/m$^2$ is obtained.

Next, the whole heat estimator 145 estimates the overall heat loss amount lost from the whole body as follows, using the first heat loss amount "54.2 W/m$^2$".

The whole heat estimator 145 (in Step S5A) calculates the heat loss amount "54.2/(1/3) = 162.6 W/m$^2$" lost from the clothed portion including the first clothed portion to the clothing by dividing the first heat loss amount by the ratio $\alpha$ (herein, $\alpha$ = 1/3).

Next, the whole heat estimator 145 calculates the heat loss amount "$162.6 \times (3/7)$ = 69.7 W/m$^2$" lost from the non-clothed portion to the outside of the body by multiplying the heat loss amount "162.6 W/m$^2$" lost

from the clothed portion to the clothing by the ratio β stored in the memory (herein, β = 3/7).

Next, the whole heat estimator 145 sums the heat loss amount "162.6 W" lost from the clothed portion and the heat loss amount "69.7 W/m²" lost from the non-clothed portion, and divides the obtained sum by the surface area (herein, A = 4.5) of the whole body to obtain the overall heat loss amount (162.6 + 69.7)/4.5 = 51.6 W/m².

The thermal sensation estimator 17 then obtains the thermal sensation estimation value "cold" corresponding to the overall heat loss amount "51.6 W/m²", using the thirteenth correspondence information stored in the memory.

The thermal sensation estimation value "cold" thus obtained estimate is output to the air conditioning device 2.

The air conditioning controller 22 of the air conditioning device 2 controls the air conditioning unit 21 based on the thermal sensation "cold" to change the wind temperature of the wind blowing out from the air blowout port 211 to a temperature that is higher than the set value by a predetermined temperature (e.g., 3 degrees). When the air temperature in the interior accordingly increases and the thermal sensation of the user is changed to "comfortable," the air conditioning controller 22 returns the wind temperature to the set value.

As described above, in the interior of the car 300, since the air blowout port 211 of the air conditioning device 2 is disposed near the user, the flow of the wind toward the user from the air blowout port 211 may be blocked by an obstacle (the arms of the user, luggage, etc.), and the wind speed (hereinafter, real wind speed) of the wind actually hitting the human body may decrease.

In such a usage environment, in a conventional system using the measured value of wind speed, the estimation accuracy of the thermal sensation may be reduced. However, in the air conditioning system 100 according to the embodiment of the present disclosure, the thermal sensation including the influence of the wind can be estimated with high accuracy without using the measured value of the wind speed.

(5-2) Usage Example in Room of Building

The air conditioning system 100 according to this usage example includes the thermal sensation estimation device 1 and two or more air conditioning devices 2.

The two or more air conditioning devices 2 of the air conditioning system 100 are, for example, an air conditioner and an electric fan. In the air conditioning system 100, for example, when the electric fan performs air blowing operation, the thermal sensation of the user decreases, and the air conditioner accordingly suppresses cooling operation.

Therefore, the air conditioning system 100 can achieve comfort and energy savings without performing complicated control for cooperating a plurality of air conditioning devices 2.

The estimation of the skin temperature is essential in the above-described embodiment but should not be construed as limiting. Even if the heat loss amount is estimated by using the surface temperature of the clothing and the clothing amount without using the skin temperature, the air conditioning system 100 has the effect of improving the estimation accuracy of the thermal sensation including the influence of the fever of the estimation target, compared with the prior art document described above.

Specifically, in the present disclosure, the heat loss amount estimator 14 estimates the heat loss amount, using the surface temperature of the clothing and the clothing amount without using the skin temperature. In this case, when the user has a fever because of his/her cold or the like, the surface temperature of the clothing increases, and accordingly the estimation value of the heat loss amount by the heat loss amount estimator 14 also increases. In response to the increase in the estimation value of the heat loss amount, the thermal sensation is likely to be estimated as the estimation value close to "cold" side by the thermal sensation estimator 17.

Accordingly, when the user has the fever, the thermal sensation estimation value closer to "cold" side is more likely to be output from the thermal sensation estimation device 1 to the air conditioning device 2, compared with when the user's temperature is normal. The air conditioning device 2 therefore perform the air conditioning control in the direction of increasing the air temperature. This allows accurate estimation of the thermal sensation without using the skin temperature even when the user has the fever, and thus appropriate air conditioning control can be performed.

The function similar to that of the thermal sensation estimation device 1 according to the embodiment described above may be realized by a thermal sensation estimation method, a (computer) program, or a non-transitory recording medium in which the program is recorded, or the like. The thermal sensation estimation method includes at least Step S1 (acquisition step), Step S3 (clothing amount estimation step), Steps S4 and S5 (heat loss amount estimation step), and Step S6 (thermal sensation estimation step), of various steps described in (4-1). The program is a program designed to cause a computer to execute the thermal sensation estimation method.

(6) Recapitulation

A thermal sensation estimation device (1) according to a first aspect includes an acquirer (11), a clothing amount estimator (13), a heat loss amount estimator (14, 14a, 14b) and a thermal sensation estimator (17). The acquirer (11) is configured to acquire information about a surface temperature of a surface region in a part of clothing of a user. The clothing amount estimator (13) is configured to estimate a clothing amount at a clothed portion, the clothed portion being a part of a body of the user, covered with the surface region. The heat loss amount estimator (14, 14a, 14b) is configured to estimate, based on at least the information about the surface temperature and the clothing amount, a heat loss amount lost from the user's body. The thermal sensation estimator (17) is configured to estimate thermal sensation of the user based on the heat loss amount.

According to this aspect, the heat loss amount lost from the human body is obtained based on the surface temperature of the clothing and the clothing amount, and the thermal sensation is estimated based on the heat loss amount, which can contribute to improving accuracy of estimating the thermal sensation including an influence of a fever of an estimation target.

Accordingly, even if the estimation target has a fever because of his/her cold, this aspect can more precisely estimate the thermal sensation, and furthermore, can also more precisely perform the air conditioning controlling.

A thermal sensation estimation device (1) according to a second aspect, which may be implemented in conjunction with the first aspect, further includes a skin temperature estimator (12). The skin temperature estimator (12) is configured to estimate a skin temperature of the clothed portion of the user's body. The heat loss amount estimator (14, 14a, 14b) is configured to estimate, based on at least the information about the surface temperature, the skin temperature of the clothed portion and the clothing amount, the heat loss amount lost from the user's body.

According to this aspect, the heat loss amount lost from the human body is obtained based on the skin temperature under the clothing in addition to the surface temperature of the clothing and the clothing amount, which can contribute to improving accuracy of estimating the thermal sensation including an influence of blowing air.

Note that, for example, JP 2017-3195 A discloses an air conditioner configured to control the air conditioning based on the thermal sensation of a human staying in a target space. In this air conditioner, the thermal image acquirer acquires a thermal image representing a temperature distribution in the target space. In this air conditioner, the wind speed estimator estimates a wind speed in the target space based on one or more parameters, which are set for the air conditioner and include a wind speed parameter to define a speed of wind from an air blowout port of the air conditioner. In this air conditioner, the heat loss amount estimator estimates the heat loss amount lost from the body of the human based on the thermal image acquired and the wind speed estimated. In this air conditioner, the thermal sensation estimator the thermal sensation of the human based on the heat loss amount lost from the body, thus estimated.

The air conditioner described above can estimate the thermal sensation including the influence of blowing air, by using the one or more parameters including the wind speed parameter, but the actual wind speed may change depending on presence or absence of an obstacle, an arrangement of the obstacle, or the like. For example, if the obstacle exists between the air blowout port and the human, the obstacle may block the wind flow toward the human from the air blowout port, and therefore the actual wind speed may be reduced. Such a case may increase an error of the wind speed estimated with respect to the actual wind speed. Accordingly, the accuracy of estimating the heat loss amount and the accuracy of estimating the thermal sensation may be also reduced.

Compared with the air conditioner described above, the thermal sensation estimation device (1) according to the second aspect does not need to measure the wind speed, because of not using a measured value of the wind speed. Therefore, even if the obstacle exists between the air blowout port (211) and the human, the thermal sensation estimation device (1) can more easily estimate the thermal sensation including the influence of blowing air with higher accuracy.

A thermal sensation estimation device (1) according to a third aspect, which may be implemented in conjunction with the second aspect, further includes a thermal camera (301) disposed at a place to capture a thermal image of the user. The acquirer (11) is configured to acquire the information about the surface temperature based on the thermal image captured by the thermal camera (301).

According to this aspect, the thermal sensation estimation device (1) can acquire the information about the surface temperature remotely and extensively.

In a thermal sensation estimation device (1) according to a fourth aspect, which may be implemented in conjunction with the third aspect, the skin temperature estimator (12) is configured to: obtain, based on the thermal image, a skin temperature of a non-clothed portion, the non-clothed portion being a part of the user's body, which is not covered with the clothing; and estimate the skin temperature of the clothed portion of the user's body based on the skin temperature of the non-clothed portion of the user's body thus obtained.

According to this aspect, the thermal sensation estimation device (1) can more easily estimate the skin temperature of the clothed portion by using the skin temperature of the non-clothed portion.

A thermal sensation estimation device (1) according to a fifth aspect, which may be implemented in conjunction with the fourth aspect, further includes a pressure sensor (302) disposed at a seat (330) on which the user is seated. The skin temperature estimator (12) includes: a calculator (121) and a corrector (122). The calculator (121) is configured to obtain height data of the user based on the thermal image, obtain weight data of the user based on an output result of the pressure sensor (302), and calculate a subcutaneous fat value as a value related to subcutaneous fat of the user based on the weight data and the height data. The corrector (122) is configured to correct the skin temperature estimated by the skin temperature estimator (12) in accordance with the subcutaneous fat value calculated by the calculator (121).

According to this aspect, the amount of fat is estimated based on the weight data and the height data, and the skin temperature is corrected based on the amount of fat, and accordingly, the variation of the skin temperature depending on the amount of fat can be reduced. As a result, the thermal sensation estimation device (1) can more accurately estimate the thermal sensation.

In a thermal sensation estimation device (1) according to a sixth aspect, which may be implemented in conjunction with the fourth or fifth aspect, the clothing amount estimator (13) is configured to estimate the clothing amount based on information about at least one of a season, a date and an air temperature.

According to this aspect, the thermal sensation estimation device (1) can more easily estimate the clothing amount, by using the information about the at least one of the season, the date and the air temperature.

In a thermal sensation estimation device (1) according to a seventh aspect, which may be implemented in conjunction with the fourth or fifth aspect, the clothing amount estimator (13) is configured to estimate the clothing amount based on air temperature in a windless condition and the surface temperature.

According to this aspect, the thermal sensation estimation device (1) can estimate the clothing amount with higher accuracy, by using the air temperature in the windless.

In a thermal sensation estimation device (1) according to an eighth aspect, which may be implemented in conjunction with the fourth or fifth aspect, the clothing amount estimator (13) is configured to estimate the clothing amount based on an image of the user captured by a visible light camera disposed at a place to capture the image of the user.

According to this aspect, the thermal sensation estimation device (1) can estimate the clothing amount with higher accuracy, by using the image captured by visible light.

In a thermal sensation estimation device (1) according to a ninth aspect, which may be implemented in conjunction with any one of the fourth to eighth aspects, the clothed portion of the user's body is a first clothed portion of one or more clothed portions of the user's body, covered with the clothing. The surface region is a first surface region, as a surface region of a part of the clothing, covering the first clothed portion of the user's body. The surface temperature is a surface temperature of the first surface region. The clothing amount is a first clothing amount of the user in the first surface region. The heat loss amount is an overall heat loss amount lost from a whole body of the user. The heat loss amount estimator (14, 14a, 14b) includes a first heat estimator (141) and a whole heat estimator (145, 145a, 145b). The first heat estimator (141) is configured to estimate a first heat loss amount lost from the first clothed portion of the user's body to the clothing, based on information about the surface temperature of the first surface region, a skin temperature of the first clothed portion of the user's body, and the first clothing amount in the first surface region. The whole heat estimator (145, 145a, 145b) is configured to estimate the overall heat loss amount based on at least the first heat loss amount.

According to this aspect, the thermal sensation estimation device (1) can estimate the overall heat loss amount lost from the whole body based on at least the first heat loss amount, by estimating the first heat loss amount lost from the first clothed portion based on the skin temperature of the clothed portion, the surface temperature and the clothing amount.

In a thermal sensation estimation device (1) according to a tenth aspect, which may be implemented in conjunction with the ninth aspect, the clothing covers a chest, an arm and a leg, of a plurality of body parts constituting the user's body. The first clothed portion is the chest. The heat loss amount estimator (14a) further includes a temporary thermal sensation estimator (142). The temporary thermal sensation estimator (142) is configured to estimate, based on the first heat loss amount, temporary thermal sensation, as thermal sensation of the user temporarily estimated. The skin temperature estimator (12) is further configured to estimate a skin temperature of a second clothed portion of the user's body based on the temporary thermal sensation, the second clothed portion being the arm or the leg. The acquirer (11) is further configured to acquire information about a surface temperature of a second surface region, as a surface region of a part of the clothing, covering the second clothed portion of the user's body. The clothing amount estimator (13) is further configured to estimate a second clothing amount of the user in the second surface region. The heat loss amount estimator (14a) further includes a second heat estimator (143). The second heat estimator (143) is configured to estimate a second heat loss amount lost from the second clothed portion of the user's body to the clothing, based on information about the surface temperature of the second surface region, a skin temperature of the second clothed portion of the user's body, and the second clothing amount in the second surface region. The whole heat estimator (145a) is configured to estimate the overall heat loss amount, additionally using the second heat loss amount.

According to this aspect, the thermal sensation estimation device (1) can estimate the overall heat loss amount lost from the whole body with higher accuracy based on the first heat loss amount and the second heat loss amount, by estimating the second heat loss amount lost from the arm or the leg in addition to the first heat loss amount lost from the chest.

In a thermal sensation estimation device (1) according to an eleventh aspect, which may be implemented in conjunction with the tenth aspect, the user is in an interior of a car (300) where an air conditioning device (2) is provided. The second clothed portion of the user's body is the arm. The second heat loss amount is a heat loss amount lost from the arm to the clothing. The air conditioning device (2) includes an air blowout port (211) in which a regulating member (211a) is disposed. The regulating member (211a) is configured to regulate a wind blowing direction into a range to include directions toward the first clothed portion and the second clothed portion of the user's body, but not to include a direction toward a third clothed portion as the leg of the user's body. The heat loss amount estimator (14a) further includes a third heat estimator (144). The third heat estimator (144) is configured to estimate a third heat loss amount lost from the third clothed portion as the leg of the user's body to the clothing, based on a set temperature and a set wind volume of the air conditioning device (2). The whole heat estimator (145a) is configured to estimate the overall heat loss amount, additionally using the third heat loss amount.

According to this aspect, the regulating member (211a) is disposed in the air blowout port (211) of the air conditioning device (2) in the car (300), which can prevent the wind from directly blowing against the leg. Therefore, the thermal sensation estimation device (1) can estimate the third heat loss amount lost from the leg based on the set temperature and the set wind volume of the air conditioning device (2). Accordingly, the thermal sensation estimation device (1) can more easily estimate the overall heat loss amount lost from the whole body with higher accuracy, using the first, second and third heat loss amounts.

In a thermal sensation estimation device (1) according to a twelfth aspect, which may be implemented in conjunction with the ninth aspect, the non-clothed portion is a head of the user. The heat loss amount estimator (14b) further includes a wind speed back calculator (146) and a fourth heat estimator (147). The wind speed back calculator (146) is configured to calculate back a wind speed from the first heat loss amount. The fourth heat estimator (147) is configured to estimate a fourth heat loss amount lost from the non-clothed portion of the user's body to outside air that is air outside the clothing, based on the wind speed, a temperature of the outside air and the skin temperature of the non-clothed portion. The whole heat estimator (145b) is configured to estimate the overall heat loss amount, additionally using the fourth heat loss amount.

According to this aspect, the thermal sensation estimation device (1) can estimate the overall heat loss amount lost from the whole body with higher accuracy, using the first and fourth amounts of heat, by calculating back the wind speed from the first heat loss amount, and estimating the fourth heat loss amount lost from the head as the non-clothed portion, based on the wind speed, the temperature of the outside air and the skin temperature of the chest.

A thermal sensation estimation device (1) according to a thirteenth aspect, which may be implemented in conjunction with any one of the ninth to twelfth aspects, further includes a metabolic amount estimator (15) and a subtractor (16). The metabolic amount estimator (15) is configured to estimate a metabolic amount of the user. The subtractor (16) is configured to subtract the metabolic amount from the overall heat loss amount. The thermal sensation estimator (17) is configured to estimate the thermal sensation of the user based on a subtraction result of the subtractor (16).

According to this aspect, the thermal sensation estimation device (1) can more accurately estimate the heat loss amount in consideration of the metabolic amount, which changes due to age, sex and any other factor, by estimating the metabolic amount and subtracting the metabolic amount from the heat loss amount.

An air conditioning device (2) according to a fourteenth aspect includes an air conditioning unit (21) and an air conditioning controller (22). The air conditioning unit (21) is configured to blow out wind in which at least one of a wind volume or a wind temperature is adjusted. The air conditioning controller (22) is configured to control the air conditioning unit (21) based on the thermal sensation of the user, estimated by the thermal sensation estimation device (1) of any one of the first to thirteenth aspects.

According to this aspect, the air conditioning device (2) can contribute to improving accuracy of estimating the thermal sensation including an influence of a fever of an estimation target and can contribute to more precisely performing the air conditioning based on an estimation result.

An air conditioning system (100) according to a fifteenth aspect includes the thermal sensation estimation device (1) of any one of the first to thirteenth aspects, and one or more air conditioning devices (2). Each of the one or more air conditioning devices (2) includes an air conditioning unit (21) and an air conditioning controller (22). The air conditioning unit (21) is configured to blow out wind in which at least one of a wind volume or a wind temperature is adjusted. The air conditioning controller (22) is configured to control the air conditioning unit (21) based on the thermal sensation of the user, estimated by the thermal sensation estimation device (1).

According to this aspect, the thermal sensation estimation device (1) can contribute to improving accuracy of estimating the thermal sensation including an influence of blowing air, and each of the one or more air conditioning devices (2) controls at least one of the wind volume or the wind temperature based on the thermal sensation estimated, which can more precisely perform the air conditioning controlling.

For example, when the air conditioning system (100) includes an air conditioner and an electric fan, and the electric fan performs operation of blowing wind, the thermal sensation is reduced, and the air conditioner accordingly would suppress cooling operation. Therefore, the air conditioning system (100) can achieve both of comfort and energy saving without complex controlling for cooperation of a plurality of air conditioning devices (2).

A thermal sensation estimation method according to a sixteenth aspect includes an acquisition step (S1), a clothing amount estimation step (S3), a heat loss amount estimation step (S4, S5), and a thermal sensation estimation step (S6). The acquisition step (S1) includes acquiring information about a surface temperature of a surface region in a part of clothing of a user. The clothing amount estimation step (S3) includes estimating a clothing amount at a clothed portion, the clothed portion being a part of a body of the user, covered with the surface region. The heat loss amount estimation step (S4, S5) includes estimating, based on at least the information about the surface temperature and the clothing amount, a heat loss amount lost from the user's body. The thermal sensation estimation step (S6) includes estimating thermal sensation of the user based on the heat loss amount.

According to this aspect, the thermal sensation estimation method can contribute to improving accuracy of estimating the thermal sensation including an influence of a fever of an estimation target.

A program according to a seventeenth aspect is designed to cause one or more processors to perform the thermal sensation estimation method according to the sixteenth aspect.

According to this aspect, the program can contribute to improving accuracy of estimating the thermal sensation including an influence of a fever of an estimation target.

**Reference Signs List**

| | |
|---|---|
| 1 | Thermal Sensation Estimation Device |
| 2 | Air Conditioning Device |
| 11 | Acquirer |
| 12 | Skin Temperature Estimator |
| 13 | Clothing Amount Estimator |
| 14, 14a, 14b | Heat Loss Amount Estimator |
| 15 | Metabolic Amount Estimator |
| 16 | Subtractor |
| 17 | Thermal Sensation Estimator |
| 21 | Air Conditioning Unit |
| 22 | Air Conditioning Controller |
| 100 | Air Conditioning System |
| 121 | Calculator |
| 122 | Corrector |
| 141 | First Heat Estimator |
| 142 | Temporary Thermal Sensation Estimator |
| 143 | Second Heat Estimator |
| 144 | Third Heat Estimator |
| 145, 145a, 145b | Whole Heat Estimator |

| | |
|---|---|
| 146 | Wind Speed Back Calculator |
| 147 | Fourth Heat Estimator |
| 211 | Air Blowout Port |
| 211a | Regulating Member |
| 300 | Car |
| 330 | Seat |
| 301 | Thermal camera |
| 302 | Pressure Sensor |

**Claims**

1. A thermal sensation estimation device, comprising:

   an acquirer configured to acquire information about a surface temperature of a surface region in a part of clothing of a user;
   a clothing amount estimator configured to estimate a clothing amount at a clothed portion, the clothed portion being a part of a body of the user, covered with the surface region;
   a heat loss amount estimator configured to estimate, based on at least the information about the surface temperature and the clothing amount, a heat loss amount lost from the user's body; and
   a thermal sensation estimator configured to estimate thermal sensation of the user based on the heat loss amount.

2. The thermal sensation estimation device of claim 1, further comprising a skin temperature estimator configured to estimate a skin temperature of the clothed portion of the user's body, wherein
   the heat loss amount estimator is configured to estimate, based on at least the information about the surface temperature, the skin temperature of the clothed portion and the clothing amount, the heat loss amount lost from the user's body.

3. The thermal sensation estimation device of claim 2, further comprising a thermal camera disposed at a place to capture a thermal image of the user, wherein
   the acquirer is configured to acquire the information about the surface temperature based on the thermal image captured by the thermal camera.

4. The thermal sensation estimation device of claim 3, wherein
   the skin temperature estimator is configured to:

   obtain, based on the thermal image, a skin temperature of a non-clothed portion, the non-clothed portion being a part of the user's body, which is not covered with the clothing; and
   estimate the skin temperature of the clothed portion of the user's body based on the skin temperature of the non-clothed portion of the user's body thus obtained.

5. The thermal sensation estimation device of claim 4, further comprising a pressure sensor disposed at a seat on which the user is seated, wherein the skin temperature estimator includes:

a calculator configured to obtain height data of the user based on the thermal image, obtain weight data of the user based on an output result of the pressure sensor, and calculate a subcutaneous fat value as a value related to subcutaneous fat of the user based on the weight data and the height data; and
a corrector configured to correct the skin temperature estimated by the skin temperature estimator in accordance with the subcutaneous fat value calculated by the calculator.

6. The thermal sensation estimation device of claim 4 or 5, wherein
the clothing amount estimator is configured to estimate the clothing amount based on information about at least one of a season, a date and an air temperature.

7. The thermal sensation estimation device of claim 4 or 5, wherein
the clothing amount estimator is configured to estimate the clothing amount based on air temperature in a windless condition and the surface temperature.

8. The thermal sensation estimation device of claim 4 or 5, wherein
the clothing amount estimator is configured to estimate the clothing amount based on an image of the user captured by a visible light camera disposed at a place to capture the image of the user.

9. The thermal sensation estimation device of any one of claims 4 to 8, wherein

the clothed portion of the user's body is a first clothed portion of one or more clothed portions of the user's body, covered with the clothing,
the surface region is a first surface region, as a surface region of a part of the clothing, covering the first clothed portion of the user's body,
the surface temperature is a surface temperature of the first surface region,
the clothing amount is a first clothing amount of the user in the first surface region,
the heat loss amount is an overall heat loss amount lost from a whole body of the user, and
the heat loss amount estimator includes:

a first heat estimator configured to estimate a first heat loss amount lost from the first clothed portion of the user's body to the clothing, based on information about the surface temperature of the first surface region, a skin temperature of the first clothed portion of the user's body, and the first clothing amount in the first surface region; and
a whole heat estimator configured to estimate the overall heat loss amount based on at least the first heat loss amount.

10. The thermal sensation estimation device of claim 9, wherein

the clothing covers a chest, an arm and a leg, of a plurality of body parts constituting the user's body,
the first clothed portion is the chest,
the heat loss amount estimator further includes a temporary thermal sensation estimator configured to estimate, based on the first heat loss amount, temporary thermal sensation, as thermal sensation of the user temporarily estimated,
the skin temperature estimator is further configured to estimate a skin temperature of a second clothed portion of the user's body based on the temporary thermal sensation, the second clothed portion being the arm or the leg,
the acquirer is further configured to acquire information about a surface temperature of a second surface region, as a surface region of a part of the clothing, covering the second clothed portion of the user's body,
the clothing amount estimator is further configured to estimate a second clothing amount of the user in the second surface region,
the heat loss amount estimator further includes a second heat estimator configured to estimate a second heat loss amount lost from the second clothed portion of the user's body to the clothing, based on information about the surface temperature of the second surface region, a skin temperature of the second clothed portion of the user's body, and the second clothing amount in the second surface region, and
the whole heat estimator is configured to estimate the overall heat loss amount, additionally using the second heat loss amount.

11. The thermal sensation estimation device of claim 10, wherein

the user is in an interior of a car where an air conditioning device is provided,
the second clothed portion of the user's body is the arm,
the second heat loss amount is a heat loss amount lost from the arm to the clothing,
the air conditioning device includes an air blowout port in which a regulating member is disposed, the regulating member being configured to regulate a wind blowing direction into a range to include directions toward the first clothed portion and the second clothed portion of the user's body, but not to include a direction toward a third clothed portion as the leg of the user's body, the heat loss amount estimator further includes a third heat estimator configured to estimate a third heat loss amount lost from the third clothed portion as the leg of the user's body to the clothing, based on a set temperature and a set wind volume of the air conditioning device, and the whole heat estimator is configured to estimate the overall heat loss amount, additionally using the third heat loss amount.

12. The thermal sensation estimation device of claim 9, wherein

the non-clothed portion is a head of the user, the heat loss amount estimator further includes:

a wind speed back calculator configured to calculate back a wind speed from the first heat loss amount; and
a fourth heat estimator configured to estimate a fourth heat loss amount lost from the non-clothed portion of the user's body to outside air that is air outside the clothing, based on the wind speed, a temperature of the outside air and the skin temperature of the non-clothed portion, and

the whole heat estimator is configured to estimate the overall heat loss amount, additionally using the fourth heat loss amount.

13. The thermal sensation estimation device of any one of claims 9 to 12, further comprising:

a metabolic amount estimator configured to estimate a metabolic amount of the user; and
a subtractor configured to subtract the metabolic amount from the overall heat loss amount, wherein
the thermal sensation estimator is configured to estimate the thermal sensation of the user based on a subtraction result of the subtractor.

14. An air conditioning device, comprising:

an air conditioning unit configured to blow out wind in which at least one of a wind volume or a wind temperature is adjusted; and
an air conditioning controller configured to control the air conditioning unit based on the thermal sensation of the user, estimated by the thermal sensation estimation device of any one of claims 1 to 13.

15. An air conditioning system, comprising:

the thermal sensation estimation device of any one of claims 1 to 13; and
one or more air conditioning devices, wherein each of the one or more air conditioning devices includes:

an air conditioning unit configured to blow out wind in which at least one of a wind volume or a wind temperature is adjusted; and
an air conditioning controller configured to control the air conditioning unit based on the thermal sensation of the user, estimated by the thermal sensation estimation device.

16. A thermal sensation estimation method, comprising:

an acquisition step including acquiring information about a surface temperature of a surface region in a part of clothing of a user;
a clothing amount estimation step including estimating a clothing amount at a clothed portion, the clothed portion being a part of a body of the user, covered with the surface region;
a heat loss amount estimation step including estimating, based on at least the information about the surface temperature and the clothing amount, a heat loss amount lost from the user's body; and
a thermal sensation estimation step including estimating thermal sensation of the user based on the heat loss amount.

17. A program designed to cause one or more processors to perform the thermal sensation estimation method of claim 16.

FIG. 1

100

1

Thermal Sensation Estimation Device

Skin Temperature Estimator —12

Calculator —121

Corrector —122

11
Acquirer

14
Heat Loss Amount Estimator

13
Clothing Amount Estimator

15
Metabolic Amount Estimator

16
Subtractor

17
Thermal Sensatio Estimator

2
Air Conditioning Device

Air Conditioning Unit —21

Air Conditioning Controller —22

# FIG. 2

14 — Heat Loss Amount Estimator

| First Heat Estimator | — 141 |

↓

| Whole Heat Estimator | — 145 |

*FIG. 3*

*FIG. 4*

| Date (Period) | Season | Clothing Amount Estimation Value(Clo) |
|---|---|---|
| 4/1～6/30 | Spring | 0.8 |
| 7/1～9/30 | Summer | 0.4 |
| 10/1～12/31 | Autumn | 0.8 |
| 1/1～3/31 | Winter | 1.2 |

*FIG. 5*

```
              ┌─────────────┐
              │    Start     │
              └──────┬───────┘
S1                   │
┌────────────────────▼────────────────────┐
│  Acquire Surface Temperature Information │
│         of First Surface Region          │
└────────────────────┬────────────────────┘
S2                   │
┌────────────────────▼────────────────────┐
│        Estimate Skin Temperature of      │
│        First Clothed Portion (Chest)     │
└────────────────────┬────────────────────┘
S3                   │
┌────────────────────▼────────────────────┐
│          Estimate Clothing Amount in     │
│             First Surface Region         │
└────────────────────┬────────────────────┘
S4                   │
┌────────────────────▼────────────────────┐
│         Estimate First Heat Loss Amount  │
│ based on Surface Temperature Information, │
│   Skin Temperature and Clothing Amount   │
└────────────────────┬────────────────────┘
S5                   │
┌────────────────────▼────────────────────┐
│       Estimate Overall Heat Loss Amount  │
│ based on at least First Heat Loss Amount │
└────────────────────┬────────────────────┘
S6                   │
┌────────────────────▼────────────────────┐
│     Estimate Thermal Sensation based on  │
│          Overall Heat Loss Amount        │
└────────────────────┬────────────────────┘
                     │
              ┌──────▼───────┐
              │     End      │
              └─────────────┘
```

## FIG. 6

```
        ( Estimation of Skin Temperature )
S21                      │
        ┌────────────────▼────────────────┐
        │     Acquire Skin Temperature of  │
        │     Non-Clothed Portion (Head)   │
        └────────────────┬────────────────┘
S22                      │
        ┌────────────────▼────────────────┐
        │     Estimate Skin Temperature of │
        │   First Clothed Portion based on Skin │
        │  Temperature of Non-Clothed Portion │
        └────────────────┬────────────────┘
S23                      │
        ┌────────────────▼────────────────┐
        │       Calculate Value related to │
        │          Subcutaneous Fat        │
        └────────────────┬────────────────┘
S24                      │
        ┌────────────────▼────────────────┐
        │ Correct Skin Temperature Estimated in │
        │  accordance with Value calculated │
        └────────────────┬────────────────┘
                         │
                    (   End   )
```

*FIG. 7*

```
        ╭─────────────────────────────────╮
        │  Estimation of Thermal Sensation │
        ╰─────────────────────────────────╯
S61                      │
        ┌─────────────────────────────────┐
        │      Estimate Metabolic Amount   │
        └─────────────────────────────────┘
S62                      │
        ┌─────────────────────────────────┐
        │ Subtract Metabolic Amount from Overall │
        │           Heat Loss Amount       │
        └─────────────────────────────────┘
S63                      │
        ┌─────────────────────────────────┐
        │ Estimate Thermal Sensation based on Overall │
        │   Heat Loss Amount after Subtraction │
        └─────────────────────────────────┘
                         │
                ╭────────────────╮
                │      End       │
                ╰────────────────╯
```

FIG. 8

FIG. 9

## FIG. 10

211a
211
320

FIG. 11

14a — Heat Loss Amount Estimator

First Heat Estimator —141

Temporary Thermal Sensation Estimator —142

Second Heat Estimator —143

Whole Heat Estimator —145a

Third Heat Estimator —144

# FIG. 12

( Estimation of Overall Heat Loss Amount )

**S51**

Estimate Temporary Thermal Sensation based on First Heat Loss Amount

**S52**

Estimate Skin Temperature of Second Clothed Portion (Arms) based on Temporary Thermal Sensation

**S53**

Acquire Surface Temperature Information of Second Surface Region corresponding to Second Clothed Portion

**S54**

Estimate Clothing Amount in Second Surface Region

**S55**

Estimate Second Heat Loss Amount lost from Second Clothed Portion to Clothing based on Surface Temperature of Second Surface Region, Skin Temperature of Second Clothed Portion, and Clothing Amount in Second Surface Region

**S56**

Estimate Third Heat Loss amount lost from Third Clothed Portion (Legs) to Clothing based on Set Temperature and Set Wind Volume of Air Conditioning Device

**S57**

Estimate Overall Heat Loss Amount, using First to Third Heat Loss Amounts

( End )

## FIG. 13

14b —

Heat Loss Amount Estimator

First Heat Estimator —141

Wind Speed Back Calculator —146

Fourth Heat Estimator —147

Whole Heat Estimator —145b

*FIG. 14*

```
┌──────────────────────────────────────────┐
( Estimation of Overall Heat Loss Amount )
└──────────────────────────────────────────┘
S5a                    │
     ┌─────────────────▼─────────────────┐
     │   Calculate back Wind Speed from  │
     │        First Heat Loss Amount     │
     └─────────────────┬─────────────────┘
S5b                    │
     ┌─────────────────▼─────────────────┐
     │        Acquire Air Temperature    │
     └─────────────────┬─────────────────┘
S5c                    │
     ┌─────────────────▼─────────────────┐
     │    Estimate Fourth Heat Loss Amount, │
     │    as Heat Loss Amount lost from Non- │
     │    clothed Portion (Head), based on Wind │
     │      Speed, Air Temperature and Skin  │
     │  Temperature of Non-clothed Portion (Head) │
     └─────────────────┬─────────────────┘
S5d                    │
     ┌─────────────────▼─────────────────┐
     │  Estimate Overall Heat Loss Amount, using │
     │    First and Fourth Heat Loss Amounts │
     └─────────────────┬─────────────────┘
                       │
              ┌────────▼────────┐
              (     Return     )
              └─────────────────┘
```

## INTERNATIONAL SEARCH REPORT

| International application No. |
|---|
| **PCT/JP2021/048942** |

### A. CLASSIFICATION OF SUBJECT MATTER

***B60H 1/00***(2006.01)i; ***F24F 11/62***(2018.01)i; ***F24F 11/70***(2018.01)i; *F24F 120/14*(2018.01)n; ***G01J 5/48***(2022.01)i
FI: G01J5/48 A; F24F11/62; B60H1/00 101Z; B60H1/00 101Q; F24F11/70; F24F120:14

According to International Patent Classification (IPC) or to both national classification and IPC

### B. FIELDS SEARCHED

Minimum documentation searched (classification system followed by classification symbols)
B60H1/00-B60H3/06, F24F11/00-F24F11/89, G01J5/00-G01J5/90

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-3195 A (PANASONIC CORP) 05 January 2017 (2017-01-05) paragraphs [0031]-[0076], fig. 1-9 | 1, 14-17 |
| A | | 2-13 |
| A | WO 2017/209089 A1 (MITSUBISHI ELECTRIC CORP) 07 December 2017 (2017-12-07) | 1-17 |
| A | WO 2015/122201 A1 (PANASONIC CORP) 20 August 2015 (2015-08-20) | 1-17 |
| A | WO 2018/042621 A1 (MITSUBISHI ELECTRIC CORP) 08 March 2018 (2018-03-08) | 1-17 |
| A | WO 2019/177002 A1 (PANASONIC IP MAN CO LTD) 19 September 2019 (2019-09-19) | 1-17 |
| A | WO 2008/087959 A1 (DAIKIN INDUSTRIES, LTD) 24 July 2008 (2008-07-24) | 1-17 |
| A | JP 8-25941 A (ZEXEL CORP) 30 January 1996 (1996-01-30) | 1-17 |
| A | JP 2020-115073 A (KANSAI ELECTRIC POWER CO INC) 30 July 2020 (2020-07-30) | 1-17 |
| A | JP 6-147613 A (GOLD STAR CO LTD) 27 May 1994 (1994-05-27) | 1-17 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/048942**

| Patent document cited in search report | | | Publication date (day/month/year) | Patent family member(s) | | | Publication date (day/month/year) |
|---|---|---|---|---|---|---|---|
| JP | 2017-3195 | A | 05 January 2017 | US | 2016/0363340 | A1 | |
| | | | | paragraphs [0068]-[0111], fig. 1-9 | | | |
| | | | | CN | 106247525 | A | |
| WO | 2017/209089 | A1 | 07 December 2017 | US | 2019/0162439 | A1 | |
| | | | | CN | 109196516 | A | |
| WO | 2015/122201 | A1 | 20 August 2015 | CN | 105339742 | A | |
| WO | 2018/042621 | A1 | 08 March 2018 | (Family: none) | | | |
| WO | 2019/177002 | A1 | 19 September 2019 | US | 2021/0031789 | A1 | |
| | | | | EP | 3767606 | A1 | |
| | | | | CN | 111867459 | A | |
| WO | 2008/087959 | A1 | 24 July 2008 | US | 2010/0036533 | A1 | |
| | | | | EP | 2123986 | A1 | |
| | | | | CN | 101583831 | A | |
| | | | | KR | 10-2009-0104063 | A | |
| JP | 8-25941 | A | 30 January 1996 | (Family: none) | | | |
| JP | 2020-115073 | A | 30 July 2020 | (Family: none) | | | |
| JP | 6-147613 | A | 27 May 1994 | US | 5374123 | A | |
| | | | | KR | 10-1994-0010702 | B1 | |

Form PCT/ISA/210 (patent family annex) (January 2015)

**EP 4 296 095 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002127728 A

- JP 2017003195 A